# EUROPEAN PATENT APPLICATION

(11) **EP 4 838 424 A1**
(43) Date of publication of application: **11.11.2026**
(21) Application number: 26176318.9
(22) Date of filing: 04.05.2026
(51) Int. Cl.: G06N 10/20, G06N 10/40, G06N 10/60, G06N 10/70

(54) **METHOD FOR ESTIMATING AN OVERLAP OF A REFERENCE QUANTUM STATE AND AN EVOLVED QUANTUM STATE OF A QUANTUM SYSTEM, HYBRID QUANTUM-CLASSICAL COMPUTING SYSTEM AND COMPUTER PROGRAM PRODUCT**

(30) Priority: 09.05.2025 US 202519203694
(71) Applicant: Max-Planck-Gesellschaft zur Förderung der Wissenschaften e.V., 80539 München (DE); President and Fellows of Harvard College, Cambridge, MA 02138 (US)
(72) Inventor: WILD, Dominik Sebastian, 85748 Garching (DE); SCHIFFER, Benjamin Frederic, 85748 Garching (DE); CIRAC SASTURAIN, Juan Ignacio, 85748 Garching (DE); MASKARA, Nishad, Cambridge, 02138 (US); LUKIN, Mikhail Dmitrievich, Cambridge, 02138 (US)
(74) Representative: Leinweber & Zimmermann

(57) **Abstract**

A method for estimating an overlap of a reference quantum state and an evolved quantum state of a quantum system, the evolved quantum state resulting from an evolution of an initial quantum state of the quantum system under a system unitary evolution having a description in terms of local operators that act on corresponding local subsystems of the quantum system, wherein the method comprises:
executing a plurality of quantum algorithms to thereby obtain a plurality of computational results indicative of a data series of phase information of the overlap, wherein each of the quantum algorithms requires at least one dedicated auxiliary quantum system associated with one of the local operators in a one-to-one correspondence and the execution of the quantum algorithm comprises:
providing a total quantum system including the quantum system prepared in the initial quantum state and the at least one auxiliary quantum system prepared in an initial auxiliary quantum state;
evolving the total quantum system under a total unitary evolution, wherein a joint action of the total unitary evolution on the quantum system and the at least one auxiliary quantum system is limited to each auxiliary quantum system and the corresponding subsystem of its associated local operator and is determined by the associated local operator;
applying a projective quantum measurement onto the reference quantum state to the quantum system and applying an auxiliary quantum measurement to the at least one auxiliary quantum system to thereby obtain the computational result.

## Description

The present invention is related to a method for estimating an overlap of a reference quantum state and an evolved quantum state of a quantum system, the evolved quantum state resulting from an evolution of an initial quantum state of the quantum system under a system unitary evolution having a description in terms of local operators that act on corresponding local subsystems of the quantum system. The invention further relates to a hybrid quantum-classical computing system, a computer program product and a computer-readable storage medium for carrying out the method.

Estimating the overlap of a reference quantum state and an evolved quantum state is important, e.g., for quantum phase estimation. Quantum phase estimation algorithms play a central role in quantum computation, in particular in quantum simulation and metrology. Quantum phase estimation allows for precise eigenvalue estimation and thereby enables, among others, the study of spectral properties in many-body quantum systems. The overlap of a reference quantum state and an evolved quantum state also finds application to compute observables as a function of the internal energy of the many-body quantum system. The existence of a method to efficiently compute this overlap is thereby instrumental to efficiently simulate quantum processes on quantum hardware which is crucial for advantages in condensed matter physics, quantum chemistry and material science, providing insights into strongly correlated materials, molecular structures and non-equilibrium dynamics. Furthermore, when the initial quantum state is identical to the reference quantum state, the overlap mentioned above is also known as the complex Loschmidt echo. The complex Loschmidt echo is a fundamental concept in statistical physics, with its absolute value squared capturing the probability of a quantum system returning to its initial state after a unitary evolution. The Loschmidt echo generally contains information about many-body properties of the quantum system and is also relevant in a variety of fields including quantum chaos, many-body physics or high-energy physics.

In theory, the known Hadamard test allows to determine the overlap of the evolved quantum state and the reference quantum state (at least for the case that the initial quantum state is identical to the reference quantum state) by a controlled application of the system unitary evolution to the quantum system, the application being controlled by a quantum state of an auxiliary quantum system. While this approach is simple in theory, the controlled application of the system unitary evolution to the quantum system is a highly non-trivial endeavor in practice. In particular, it may require a large circuit depth which hinders an efficient and reliable execution of the Hadamard test on available quantum hardware.

Due to the high relevance of quantum phase estimation, various alternative approaches to estimate the overlap have been proposed in the art. A first line of research is dedicated to improve the efficiency of quantum phase estimation algorithms that require an auxiliary quantum system. To this end, WO 2024/095008 A1 discloses variational quantum phase estimation algorithms that use an auxiliary system and a variational fast-forwarding method to generate time-involved quantum states. EP 2 979 230 B1 discloses a method for quantum phase estimation that comprises an application of a first random phase to the auxiliary quantum system and a second random phase to the quantum system. US 11, 176,478 B2 discloses a method for quantum phase estimation that comprises providing a plurality of quantum circuits connected in series, wherein an output of a first quantum circuit of the plurality of quantum circuits is an input of a second quantum circuit of the plurality of quantum circuits. Thereby, the quantum phase may be determined with a reduced and minimized number of quantum measurements.

As noisy intermediate term quantum computers (NISQ computers) have not reached fault tolerance yet, several approaches for quantum phase estimation have been proposed in the art that aim at reducing the number of controlled operations in each circuit. For example, arXiv:2304.05126v1 "Statistical Phase Estimation and Error Mitigation on a Superconducting Quantum Processor" by N. Blunt et al. discloses a method that determines a time series of phase information indicative of the overlap by applying the standard Hadamard test with a controlled application of a unitary evolution up to different points in time. arXiv:2010.02538v1 "Error Mitigation via Verified Phase Estimation" by T. O'Brien et al. discloses a method for error mitigation of a quantum phase estimation experiment with and without an auxiliary quantum system.

Another approach to overcome the problem of the large circuit depth required by the global controlled operation of the Hadamard test is presented, for example, in Y. Yang et.al "Phase-sensitive Quantum Measurement without Controlled Operations", arXiv:2308.10769v2, which is restricted to initial states with short-ranged correlations. L. Clinton et al. propose ideas building on classical signal processing techniques in "Quantum Phase Estimation without Controlled Unitaries", arXiv: 2410.21517v2, however, the practical realization could prove very challenging, and the signal processing methods are of heuristic nature and lack performance guarantees. The methods proposed in both papers do not require an auxiliary quantum system.

Despite the progress in the art of quantum phase estimation, there is still a need for efficient methods for estimating an overlap of a reference quantum state and an evolved quantum state.

This problem is solved according to a first aspect of the present invention by a method for estimating an overlap of a reference quantum state and an evolved quantum state of a quantum system, the evolved quantum state resulting from an evolution of an initial quantum state of the quantum system under a system unitary evolution having a description in terms of local operators that act on corresponding local subsystems of the quantum system, wherein the method comprises:
executing a plurality of quantum algorithms to thereby obtain a plurality of computational results indicative of a data series of phase information of the overlap, wherein each of the quantum algorithms requires at least one dedicated auxiliary quantum system associated with one of the local operators in a one-to-one correspondence and the execution of the quantum algorithm comprises:
providing a total quantum system including the quantum system prepared in the initial quantum state and the at least one auxiliary quantum system prepared in an initial auxiliary quantum state;
evolving the total quantum system under a total unitary evolution, wherein a joint action of the total unitary evolution on the quantum system and the at least one auxiliary quantum system is limited to each auxiliary quantum system and the corresponding subsystem of its associated local operator and is determined by the associated local operator;
applying a projective quantum measurement onto the reference quantum state to the quantum system and applying an auxiliary quantum measurement to the at least one auxiliary quantum system to thereby obtain the computational result.

The method according to the first aspect of the present invention does not require a global control of the whole quantum system by a quantum state of an auxiliary quantum system (e.g., a qubit) but only requires interactions between each auxiliary quantum system and an associated subsystem of the quantum system. Thereby, the depth of the quantum algorithm may be reduced compared to the prior art, and the method may be implemented efficiently and reliably.

The execution of each quantum algorithm may be by a quantum processor in one example, but the invention is not limited to this. A quantum processor is based on the laws of quantum mechanics and processes quantum information stored in quantum mechanical systems, e.g., qubits. The quantum processor may be a superconducting quantum processor, an ion quantum processor, a neutral atom quantum processor, a photonic quantum processor, etc. in one example, but is not limited to this. In one example, the quantum processor may comprise the quantum system and the at least one auxiliary quantum system, state preparation means configured to prepare the quantum system in the initial quantum state and configured to prepare the at least one auxiliary quantum system in the initial auxiliary quantum state, means to evolve the total quantum system under the total unitary evolution and measurement means configured to apply the projective quantum measurement onto the reference quantum state to the quantum system and configured to apply the auxiliary quantum measurement to the auxiliary quantum system.

The reference quantum state, the initial quantum state and the evolved quantum state may be pure or mixed quantum states, and they may be separable or entangled quantum states in one example. When the initial and reference quantum states are pure quantum states, and the system unitary is denoted by *U_{sys}*, the overlap of the reference quantum state and the evolved quantum state may be denoted as *g* = 〈*ψ_{ref}*|*U_{sys}*|*ψᵢₙᵢ*〉 = *re^{iϕ}*, 1 ≥ *r* ≥ 0, and 0 ≤ *ϕ* < 2*π* is called the phase of the overlap, wherein |*ψᵢₙᵢ*〉 is the initial quantum state, |*ψ_{ref}*〉 is the reference quantum state, *U_{sys}*|*ψᵢₙᵢ*〉 is the evolved quantum state. In particular the overlap is a complex overlap, i.e., a complex number. In certain examples, the initial quantum state is identical to the reference quantum state. In this case, the overlap may also be denoted as the complex Loschmidt echo. The invention is not limited to this, though.

Within this specification, a quantum system is in particular a quantum system that allows to define local subsystems, each being a part of the whole quantum system. I.e., the local subsystems are true subsystems of the quantum system, i.e., they are not identical to the quantum system. In one example, the quantum system may be a quantum many-body system comprising a plurality of K>1 quantum mechanical particles or modes, for example, qudits, in particular qubits, fermions, bosons, etc. (A qudit is a quantum mechanical d-level system with d ≥ 2. A qubit is a qudit with d = 2.) Then, each local subsystem may comprise a true subset 1≤k<K of quantum mechanical particles or modes and the corresponding local operators act non-trivially on each particle or mode of the subsystem. Each particle or mode has a distinct Hilbert space associated therewith. In one example, the Hilbert space of the quantum system may be a tensor product of the Hilbert spaces of K ≥ 2 distinct Hilbert spaces, each being associated with a particle or mode, e.g., a qubit or a fermionic or a bosonic mode. A "local subsystem" is not necessarily local in space, but it may be local in space in certain examples. However, the invention is not limited to the above.

The system unitary evolution has a description in terms of N > 1 local operators which may be denoted as *O*₁, ... , *O_{N}* throughout this specification. Examples of such descriptions are presented below. Each of the N local operators *Oⱼ*,*j* = 1,.., *N* acts only on a corresponding local subsystem *Sⱼ* of the quantum system. The local operator *Oⱼ* may be a k-local operator. That is, when the quantum system comprises a plurality of particles or modes, the k-local operator acts only on k<K of the K particles or modes. Pairs of subsystems may either be identical, disjoint or may have a non-vanishing overlap. At least two of the local subsystems are different from each other.

Within this specification, every quantum algorithm acts on a total quantum system that comprises the quantum system and the at least one auxiliary quantum system. Every quantum algorithm comprises a sequence of instructions to prepare the quantum system of the total quantum system in the initial quantum state and to prepare the at least one auxiliary quantum system in the initial auxiliary quantum state, to evolve the total quantum system under a total unitary evolution and to apply the projective quantum measurement onto the reference quantum state to the quantum system and to apply the auxiliary quantum measurement to the at least one auxiliary quantum system to thereby obtain a computational result associated with the quantum circuit. In particular, the initial auxiliary quantum state and/or the auxiliary quantum measurement may be the same for each quantum algorithm. For two different quantum algorithms the associated total unitary evolutions are different from each other.

Executing the quantum algorithm comprises running the quantum algorithm M ≥ 1 times (M shots) to obtain for each run (shot) an associated measurement outcome from the application of the quantum measurements. The number M of shots may be the same or may be different for two different quantum algorithms. The associated measurement outcome of each shot may comprise the measurement outcome of the projective quantum measurement onto the reference quantum state, and additionally, in certain embodiments, the measurement outcome of the auxiliary quantum measurement. In one example, the computational result associated with the quantum algorithm may comprise at least one measurement outcome of the M shots or each measurement outcome of the M shots or the computational result associated with the quantum algorithm may be obtained from the measurement outcomes of the M shots, for example, via averaging, as it is well-known in the art of quantum computation. In particular, the computational result may comprise an estimator value of an expectation value of an observable in certain examples.

Each quantum algorithm requires at least one dedicated auxiliary quantum system *ASⱼ* associated with one of the local operators *Oⱼ* in a one-to-one correspondence. That is, each quantum algorithm is associated with at least one and at most N local operators of the description of the system unitary evolution in terms of N local operators and requires for each of the associated local operators *Oⱼ* one dedicated auxiliary quantum systems *ASⱼ.* The auxiliary quantum systems are in particular pairwise disjoint, that is, they do not overlap.

For ease of notation, the at least one auxiliary quantum system required by the quantum algorithm may also be denoted as an ancilla system within this specification. That is, the ancilla system comprises the at least one auxiliary quantum system. The action of the total unitary evolution on the total quantum system of the quantum system and the ancilla system comprises the joint action on the quantum system and the ancilla system and may further comprise an action limited to the quantum system and/or an action limited to the ancilla system, in one example. When the total unitary evolution jointly acts on the quantum system and the ancilla system, each auxiliary quantum system *ASⱼ* only interacts with the corresponding subsystem *Sⱼ* of its associated local operator *Oⱼ*, and the interaction is determined by the associated local operator *Oⱼ*. In one example, the total unitary evolution may comprise for each auxiliary quantum system *ASⱼ* at least one associated unitary *Uⱼ* that jointly evolves the auxiliary quantum system *ASⱼ* and the subsystem *Sⱼ* corresponding to its associated local operator *Oⱼ*, wherein the associated unitary *Uⱼ* is determined by the local operator *Oⱼ.* In one example, the total unitary evolution comprises for each auxiliary quantum system a single associated unitary *Uⱼ.*

The execution of each quantum algorithm comprises an application of a projective quantum measurement onto the reference quantum state, |*ψ_{ref}*〉〈*ψ_{ref}*|, to the quantum system. In particular, the projective quantum measurement may be carried out at the end of the joint unitary evolution in one example. In one expedient example, the projective quantum measurement onto the reference quantum state may be carried out as follows: Many reference quantum states of interest may be obtained from an evolution of an initial unentangled computational basis state of a quantum processor, e.g., |*init*〉 = |0〉 ⊗ |0〉 ⊗ ... ⊗ |0〉 under a reference unitary evolution *U_{ref}*, i.e., |*ψ_{ref}*〉 = *U_{ref}*|*init*〉. The projective quantum measurement onto the reference quantum state |*ψ_{ref}*〉〈*ψ_{ref}*| may then be carried out by applying the reverse reference transformation ${U}_{ref}^{†}$ before a computational basis measurement, $\left|{ψ}_{ref}\right〉 \left〈{ψ}_{ref}\right| = {U}_{ref} \left|init\right〉 \left〈init\right| {U}_{ref}^{†}$. The computational basis measurement may be realized by taking snap shots in the computational basis and counting the occurrences of the initial unentangled computational basis state |*init*〉.

The execution of each quantum algorithm also comprises applying an auxiliary quantum measurement to the auxiliary quantum system. The auxiliary quantum measurement may comprise for each auxiliary quantum system a dedicated auxiliary quantum measurement that only measures the one auxiliary quantum system. The auxiliary quantum measurement(s) may be applied before, simultaneous with or after the projective quantum measurement onto the reference quantum state in one example. In particular, the auxiliary quantum measurement(s) may comprise a measurement of a Pauli operator or a computational basis measurement. In one example, the auxiliary quantum measurement may comprise for each auxiliary quantum system a measurement of at least one Pauli operator, e.g., the Pauli-X and/or Pauli-Y operator, or a computational basis measurement.

The plurality of computational results allows to estimate at least the phase of the overlap. In one example, the data series of phase information of the overlap comprises a time series of phase information of the overlap, but the invention is not limited to this.

In some examples of the method according to the first aspect of the present invention, the method may further comprise determining a value of an overlap of the initial quantum state and the reference quantum state, i.e., 〈*ψ_{ref}*|*ψᵢₙᵢₜ*〉. This may be achieved by use of a quantum processor or a classical processor in one example. For example, consider that |*ψᵢₙᵢ*〉 = *V*₁l*init*〉, with |*init*〉 = |0〉 ⊗ |0〉 ⊗ ... ⊗ |0〉 the computational basis state that the quantum processor is initialized in, and *V*₁ a unitary operation. Similarly, |*ψ_{ref}*〉 = *V*₂|*init*〉, wherein *V*₂ is a unitary operation. Then, the overlap of the initial quantum state and the reference quantum state may be written as $\left〈{ψ}_{ref}|{ψ}_{ini}\right〉 = \left〈init\left|{V}_{2}^{†}{V}_{1}\right|init\right〉$*.* Hence, the task of computing 〈*ψ_{ref}*|*ψᵢₙᵢ*〉 may be formulated as finding the overlap of a Loschmidt echo with a unitary ${V}_{2}^{†} {V}_{1}$ and may be solved according to the method of the present invention.

In one embodiment of the method according to the first aspect of the present invention, the plurality of quantum algorithms may comprise for at least one local operator of the description of the system unitary evolution in terms of local operators a quantum algorithm that requires a single auxiliary quantum system associated with the one local operator. As the quantum algorithm requires only one single auxiliary quantum system, the required quantum resources are limited. Furthermore, the quantum algorithm may be executed very efficiently. In one example, the plurality of quantum algorithms may comprise for each local operator of the description of the system unitary evolution in terms of local operators a quantum algorithm that requires a single auxiliary quantum system associated with the one local operator.

In another embodiment of the method according to the first aspect of the present invention, at least one quantum algorithm requires for each local operator of the description of the system unitary evolution in terms of local operators an associated auxiliary quantum system. In one example of the embodiment, each quantum algorithm requires for each local operator of the description of the system unitary evolution in terms of local operators an associated auxiliary quantum system. In certain examples, this may allow the estimation of the overlap with fewer quantum algorithms compared to other embodiments.

In yet another embodiment of the method according to the first aspect of the present invention, the total unitary evolution of at least one quantum algorithm may further comprise an evolution of the quantum system under the system unitary evolution up to a specific point in time. The system unitary evolution may be expressed via its generating Hamiltonian H as *U_{sys}* = *e^{-iHt}*, wherein t > 0 is a time. Then, the evolution of the quantum system under the system unitary evolution up to the specific point *tₛ* in time may be described by the unitary *U_{sys}*(*tₛ*) = *e*⁻*^{iHt^{s}}.* In one example, the plurality of quantum algorithms may comprise for each of a plurality of points in time at least one quantum algorithm that comprises an evolution of the quantum system under the system unitary evolution up to the point in time.
This includes the case where the system unitary evolution has a description in terms of a plurality of generating Hamiltonians *Hⱼ* and a plurality of unitaries *Uⱼ,* as *U_{sys} = e*^{*-iH*¹*t*¹}*U*₁*e*^{*-iH*²*t*²}*U*₂ ... *e^{-iH^{K}t^{K}}.*

In one embodiment of the method according to the first aspect of the present invention, the description of the system unitary evolution in terms of local operators may comprise a sequence of local unitary operators or a set of local Hamiltonian operators. I.e., each local operator of the description may be a local unitary operator or a local Hamiltonian that acts on a corresponding local subsystem of the quantum system. In one example of the embodiment, the system unitary evolution *U_{sys}* may have a description in terms of a sequence of the form *u_{N}* · *u*_{*N*-1} · ... · *u*₂ *· u*₁, wherein *uⱼ* is a unitary operator that acts only on the subsystem *Sⱼ.* This description may correspond to an exact decomposition of the system unitary evolution in one example, i.e., *U_{sys}* = *u_{N}* · *u*_{*N*-1} · ... · *u*₂ · *u*₁. In another example, the description may correspond to an approximation of the system unitary evolution, *U_{sys}* ≈ *u_{N}* · *u*_{*N*-1} · ... · *u*₂ ·*u*₁, e.g., obtained via a Trotter decomposition of the system unitary evolution. In one example, the description may be obtained from a first order Trotter decomposition of the system unitary evolution. In another example, the description may be a set of local Hamiltonian operators {*h*₁, *h*₂, ... , *h*_{*N*-1}, *h_{N}*}, wherein *hⱼ* is a local Hamiltonian operator acting only on the subsystem *hⱼ*. The sum of the local Hamiltonian operators of the set is a Hamiltonian $H = {\sum }_{j = 1}^{N} {h}_{j}$ that may generate the system unitary evolution or an approximation thereof, *U_{sys}* = *e^{-iHt}* or *U_{sys}* ≈ *e^{-iHt}* in certain examples. In some non-limiting examples t=1. In one example, each local Hamiltonian may be a unitary operator or may be proportional to a unitary operator. In one example where the quantum system comprises a plurality of K qubits, all local Hamiltonians *hⱼ* may be Pauli strings or may be proportional to Pauli strings that act on a subset of 1 ≤ *kⱼ < K* qubits. I.e., each local Hamiltonian *hⱼ* is of the form ${λ}_{j} {⊗}_{q = 1}^{K} {P}_{q}$, wherein *λⱼ* is a real number, *P_{q}* ∈ {*I_{q}, X_{q}, Y_{q}, Z_{q}*} is either the Pauli-X,-Y, or -Z operator or the identity operator acting on the qubit q, and only *kⱼ* of the K operators of the tensor product are different from the identity. In one example, *kⱼ* is the same for all local Hamiltonians *hⱼ*.

In yet another embodiment of the method according to the first aspect of the present invention, the joint action of the total unitary evolution on at least one of the auxiliary quantum systems and the corresponding subsystem of its associated local operator may comprise for at least one of the quantum algorithms a controlled application of the associated local operator to the subsystem controlled by a quantum state of the auxiliary quantum system. In one example where the local operator is a unitary operator or is proportional to a unitary operator, the joint action may comprise a controlled unitary operation on the subsystem controlled by the quantum state of the auxiliary quantum system. In this embodiment, every auxiliary quantum system controls only its associated subsystem with the controlled application of the unitary evolution, unlike the Hadamard test that requires a global controlled unitary operation.

In one embodiment of the method according to the first aspect of the present invention, the quantum system and/or the at least one auxiliary quantum system may be a qudit system, in particular a qubit system. That is, the quantum system and/or the at least one auxiliary quantum system comprises a plurality of qudits, or a plurality of qubits. When the quantum system comprises a plurality of qudits, e.g., K qudits, each local operator *Oⱼ* of the description in terms of local operators may act only on a subsystem *Sⱼ* that consists of a subset of 1 ≤ *kⱼ <* K qudits. In particular, *kⱼ* = 4, 3 or 2 in one example. In one example, each auxiliary quantum system may be a qudit system or a qubit system, i.e., a system that comprises at least one qudit or qubit. In one example, each auxiliary quantum system is a qubit system, and each of these qubits is prepared in the computational zero state |0〉. In one example of the embodiment, each auxiliary quantum system may be a qudit, and in particular a qubit. In one example, each auxiliary quantum system may be a qubit, and the initial auxiliary quantum state of each of these qubits may be the state $\left|+\right〉 = \frac{1}{√ 2} \left(\left|0\right〉+\left|1\right〉\right)$. For example, such an initial state may be prepared when the joint action of the total unitary evolution on the auxiliary quantum system and the subsystem of the associated local operator is a controlled application of the local operator that is controlled by the quantum state |+〉 of the auxiliary quantum system.

In yet another embodiment of the method according to the first aspect of the present invention, the initial auxiliary quantum state may be a separable quantum state. That is, the initial auxiliary quantum state is not entangled. Separable quantum states are easier to prepare than entangled quantum states, whereby the efficiency of the method according to the first aspect of the present invention may be improved.

In yet another embodiment of the method according to the first aspect of the present invention, the method may further comprise estimating at least a phase *ϕ* of the overlap on the basis of the computational results. In one example, the method may further comprise estimating the amplitude r of the overlap *g* = 〈*ψ_{ref}*|*U_{sys}*|*ψᵢₙᵢ*〉 = *re^{iϕ}.* Estimating at least the phase of the overlap on the basis of the computational results may be performed by a classical computer in one example. A classical computer comprises a classical processor that processes classical bits. In one example, the plurality of quantum algorithms may be executed by a quantum processor, the quantum processor may be connected to the classical computer via a network, e.g., a wireless network or a LAN network and the quantum processor may be configured to transmit the computational results to the classical processor via the network. In one example, the classical computer and the quantum computer may be arranged at remote locations. In one example, the classical computer and/or the quantum processor may be part of a cloud computer.

In one example of the embodiment, the plurality of computational results may be indicative of a data series of time derivatives of a phase of the overlap at different points in time. In one example of the embodiment, the method may comprise a numerical integration of the time derivatives of the phase , ${\left.\frac{dϕ}{dt}\right|}_{{t}_{α}}$ *α* = 1, ... , *L*, to thereby obtain the phase *ϕ* of the overlap *g* = 〈*ψ_{ref}*|*U_{sys}*|*ψᵢₙᵢ*〉 = *re^{iϕ}.* The numerical integration may be carried out on a classical computer in one example.

In one embodiment of the method according to the first aspect of the present invention, the description of the system unitary evolution in terms of local operators may comprise a sequence of local unitary operators, and the plurality of quantum algorithms may comprise for each local unitary operator of the description of the system unitary evolution in terms of local operators a quantum algorithm that requires a single auxiliary quantum system associated with the one local unitary operator so as to form a series of quantum algorithms from an initial quantum algorithm that is associated with an initial local unitary operator and includes an initial total unitary evolution that comprises the controlled application of the initial local unitary operator to its corresponding subsystem controlled by the quantum state of the auxiliary quantum system to a final quantum algorithm of the series of quantum algorithms, wherein a subsequent total unitary evolution of a subsequent quantum algorithm of the series of quantum algorithms differs from a preceding total unitary evolution of a preceding quantum algorithm of the series of quantum algorithms in that a control is removed from a previously controlled local unitary operator associated with the preceding quantum algorithm and a controlled application of a local unitary operator associated with the subsequent quantum algorithm to its corresponding subsystem is added at a position in accordance with the sequence of local unitary operators. This embodiment requires one single auxiliary quantum system for each quantum algorithm and only one single controlled application of the local unitary operator to its subsystem. Thereby, the quantum algorithms may be executed very efficiently. This embodiment is particularly well-suited for digital quantum devices as it relies on sequentially controlling each of the local unitary operators of the description of the system unitary operator. The embodiment may also be used for Floquet-engineered Hamiltonians which may be a powerful technique when the target Hamiltonian cannot be realized directly. In one example, the initial total unitary evolution may consist of the controlled application of the initial local unitary operator to its corresponding subsystem controlled by the quantum state of the auxiliary quantum system. In one example, at least one subsequent total unitary evolution may differ from the preceding total unitary evolution only in that the control is removed from the previously controlled local unitary operator associated with the preceding quantum algorithm and the controlled application of the local unitary operator associated with the subsequent quantum algorithm to its corresponding subsystem is added at the position in accordance with the sequence of local unitary operators. In one example, each subsequent total unitary evolution may differ from the preceding total unitary evolution only in that the control is removed from the previously controlled local unitary operator associated with the preceding quantum algorithm and the controlled application of the local unitary operator associated with the subsequent quantum algorithm to its corresponding subsystem is added at the position in accordance with the sequence of local unitary operators.

In the embodiment, the description of the system unitary evolution *U_{sys}* in terms of local operators comprises a sequence of local unitary operators *u_{N}* · *u*_{*N*-1} · ... · *u*₂ · *u*₁, wherein the local unitary operators *uⱼ* are applied sequentially from *u*₁ to *u_{N}*. The description may correspond to an exact decomposition of the system unitary evolution, i.e., *U_{sys}* = *u_{N}* · *u*_{*N*-1} · ... · *u*₂ · *u*₁ or it may correspond to an approximation thereof, i.e., *U_{sys}* ≈ *u_{N}* · *u*_{*N*-1} · ... · *u*₂ · *u*₁. Each local unitary operator *uⱼ* acts only on the subsystem *Sⱼ* of the quantum system. The plurality of quantum algorithms comprises a series of quantum algorithms *A*₁, ..., *A_{N}* from the initial quantum algorithm *A*₁ to the final quantum algorithm *A_{N}.* Each quantum algorithm *Aⱼ* of the series is associated with one of the local operators *u*_{*π*(*j*)} in a one-to-one correspondence, wherein *π*: {1, ... , *N*} → {1, ... , *N*}, *j* ↦ *π*(*j*) is a permutation. In one example of the embodiment, the initial total unitary evolution of the initial quantum algorithm *A*₁ associated with the initial local unitary operator *u*_{*π*(1)} consists of the controlled application of the local unitary operator *u*_{*π*(1)} to its corresponding subsystem *S*_{*π*(1)} controlled by the quantum state of the auxiliary quantum system. This operation may also be denoted by *c*-*u*_{*π*(1)} applied to the subsystem and the auxiliary quantum system throughout this specification. Similarly, the application of the operation *c*-*u*_{*π*(*j*)} to the subsystem *S*_{*π*(*j*)} and the auxiliary quantum system is defined as the controlled application of the local unitary operator *u*_{*π*(*j*)} to its corresponding subsystem *S*_{*π*(*j*)} controlled by the quantum state of the auxiliary quantum system. The second total unitary evolution of the second quantum algorithm *A*₂ associated with the local unitary operator *u*_{*π*(2)} differs from the initial total unitary evolution in that the control from c-*u*_{*π*(1)} is removed and c-*u*_{*π*(2)} is added at the position in accordance with the sequence *u_{N}* · *u*_{*N*-1} · ... · *u*₂ · *u*₁. I.e., in one example, the second total unitary evolution of the second quantum algorithm is either a unitary evolution of the quantum system with local unitary operator *u*_{*π*(1)} followed by the application of c-*u*_{*π*(2)} to the auxiliary quantum system and the subsystem *S*_{*π*(2)} (which, by slight abuse of notation, is abbreviated as c-*u*_{*π*(2)} *u*_{*π*(1)} in the following) if *π*(1) < *π*(2), and otherwise, if *π*(1) > *π*(2), the second total unitary evolution of the second quantum algorithm is the application of c-*u*_{*π*(2)} on the auxiliary quantum system and the subsystem *S*_{*π*(2)} followed by the unitary evolution of the quantum system under the local unitary operator *u*_{*π*(1)} (abbreviated as *u*_{*π*(1)} c-*u*_{*π*(2)}). The third total unitary evolution of the third quantum algorithm *A*₃ associated with the local unitary operator *u*_{*π*(3)} differs from the second total unitary evolution of the second quantum algorithm in that the control is removed from c-*u*_{*π*(2)} and c-*u*_{*π*(3)} is added at the position in accordance with the sequence *u_{N}* · *u*_{*N*-1} · ... · *u*₂ · *u*₁. I.e., in one example, if *π*(1) *< π*(2) < *π*(3), the third total unitary evolution of the third quantum algorithm *A*₃ is c-*u*_{*π*(3)}*u*_{*π*(2)}*u*_{*π*(1)}, if *π*(2) < *π*(1) < *π*(3), the third total unitary evolution of the third quantum algorithm *A*₃ is c-*u*_{*π*(3)} *u*_{*π*(1)} *u*_{*π*(2)}, if *π*(1) < *π*(3) < *π*(2), the third total unitary evolution of the third quantum algorithm *A*₃ is *u*_{*π*(2)} c-*u*_{*π*(3)} *u*_{*π*(1)}, if *π*(2) < *π*(3) < *π*(1), the third total unitary evolution of the third quantum algorithm *A*₃ is *u*_{*π*(1)} c-*u*_{*π*(3)} *u*_{*π*(2)}, if *π*(3) < *π*(2) < *π*(1), the third total unitary evolution of the third quantum algorithm *A*₃ is *u*_{*π*(1)} *u*_{*π*(2)} c-*u*_{*π*(3)}, and if *π*(3) < *π*(1) < *π*(2), the third total unitary evolution of the third quantum algorithm *A*₃ is *u*_{*π*(2)} *u*_{*π*(1)} c-*u*_{*π*(3)}. The other quantum algorithms of the series of quantum algorithms are defined in a similar way.

In one example of the embodiment, the permutation *π* is the identity, and the j-th quantum algorithm of the series of quantum algorithms is associated with the local unitary operator *uⱼ* and its total unitary evolution may be of the form c-*uⱼ u*_{*j*-1} *u*_{*j*-2} ... *u*₁.

In one example of the embodiment, the initial quantum state of the single auxiliary quantum state may be the |+〉 state for all quantum algorithms. In one example of the embodiment, the auxiliary quantum measurement of the auxiliary quantum system may be a measurement of the Pauli-X and/or Pauli-Y operators.

In one example, the embodiment may further comprise estimating the overlap by applying a recursive formula to the computational results.

In another embodiment of the method according to the first aspect of the present invention, the description of the system unitary evolution may comprise a set of local Hamiltonian operators, and the plurality of quantum algorithms may comprise for each of the local Hamiltonians and each of a plurality of points in time an associated quantum algorithm that requires a single auxiliary quantum system associated with the one local Hamiltonian, wherein the total unitary evolution comprises an evolution of the quantum system under the system unitary evolution up to the point in time, and the joint action of the total unitary evolution comprises the controlled application of an operator derived from the local Hamiltonian operator to its corresponding subsystem controlled by the quantum state of the auxiliary quantum system.

In the embodiment, the description of the system unitary evolution comprises the set of local Hamiltonian operators {*h*₁, *h*₂, ... , *h*_{*N*-1}, *h_{N}*}, wherein each *hⱼ* is a local Hamiltonian that acts only on the subsystem *Sⱼ* of the quantum system. The sum of these local Hamiltonian operators, $H = {\sum }_{j = 1}^{N} {h}_{j}$, may generate the system unitary evolution *U_{sys}* = *e^{-iHt}* or an approximation thereof, i.e., *U_{sys}* ≈ *e^{-iHt}* In one example, t=1, but the invention is not limited to this. The plurality of quantum algorithms comprises for each of the local Hamiltonians *hⱼ* and each of a plurality of points in time *t_{α}, α* = 1, ... , *L*, *t*₁ < *t*₂ *<* ··· *< t_{L}*, an associated quantum algorithm *A_{j,α}* that requires a single auxiliary quantum system, and wherein the total unitary evolution of the quantum algorithm comprises the unitary evolution of the quantum system under the system unitary up to the point in time *t_{α}*, i.e., *e^{-iHt^{α}}* and the controlled application of an operator derived from the local Hamiltonian operator *hⱼ* to its associated subsystem *Sⱼ* controlled by the quantum state of the single auxiliary quantum system. In one example, the description of the system unitary evolution may be such that at least one local Hamiltonian is proportional to a unitary operator, *hⱼ* = *λⱼuⱼ* for some real *λⱼ* (including the case *λⱼ* = 1), and the controlled application of the operator derived from the local Hamiltonian may comprise the controlled application of the unitary operator *uⱼ* to the subsystem *Sⱼ* controlled by the quantum state of the auxiliary system. In one expedient example, the description of the system unitary evolution may be such that all local Hamiltonians are proportional to unitary operators, i.e., *hⱼ* = *λⱼuⱼ*(including the case *λⱼ* = 1). Then, each controlled application of the operator derived from the local Hamiltonian operator *hⱼ* may be a controlled application of the unitary operator *uⱼ* to the subsystem *Sⱼ* controlled by the quantum state of the auxiliary system. In one example where the quantum system comprises a plurality of K qubits, all local Hamiltonians may be proportional to Pauli strings that act on a subset of k qubits. I.e., each local Hamiltonian *hⱼ* is proportional to ${\hat{P}}_{j} = {⊗}_{q = 1}^{K} {P}_{q}^{\left(j\right)}$, wherein ${P}_{q}^{\left(j\right)} ∈ \left\{{I}_{q}, {X}_{q}, {Y}_{q}, {Z}_{q}\right\}$ is either the Pauli-X,-Y, or -Z operator or the identity operator acting on the qubit q, and only 1 ≤ *k < K* of the K operators are different from the identity. In one example, all local Hamiltonians *hⱼ* may be proportional to Pauli strings that act on a corresponding subset of k qubits and the plurality of quantum algorithms comprises for each of the local Hamiltonians *hⱼ* and each of a plurality of points in time *t_{α}*, *α* = 1, ... , *L*, *t*₁ < *t*₂ < ··· < *t_{L}*, an associated quantum algorithm *A_{j,α}* that requires a single auxiliary quantum system, and wherein the total unitary evolution comprises the unitary evolution of the quantum system under the system unitary up to the point in time, i.e., *e^{-iHt^{j}}* followed by the controlled application of the Pauli string *P̂ⱼ* to the associated subsystem *Sⱼ* controlled by the quantum state of the single auxiliary quantum system. For each quantum algorithm, the initial auxiliary quantum state of the auxiliary quantum system may be the |+〉-state, and the auxiliary quantum measurement may be a Pauli-X measurement. The computational results may allow to construct a time series of the time derivative of the phase of the overlap. In one example of the embodiment, the method may further comprises estimating the phase by numerically integrating the time series of the time derivatives of the phase.

In one example of the embodiment, the system unitary evolution may be an analogue time dynamics. Then, the method may, for example, be implemented by use of hybrid analogue-digital quantum device. However, the invention is not limited to this.

In yet another embodiment of the method according to the first aspect of the present invention, the auxiliary quantum measurement may comprise for at least one auxiliary quantum system an independent measurement of the auxiliary quantum system resulting in a measurement outcome associated therewith, and wherein depending on an appropriate post-selection of the associated measurement outcome an action of the joint unitary evolution on the corresponding subsystem of its associated local operator may comprise an imaginary time evolution determined by the local operator, and the method comprises the appropriate post-selection. To be entirely clear, an "independent measurement of the auxiliary quantum system" means that this measurement does not affect the other auxiliary quantum systems. The method according to the embodiment relies on post-selection. The computational results of the embodiment comprise data indicative of the phase gradient at different points *t_{α}* in time. The phase gradient at the point *t_{α}* in time is in particular a time-derivative of the phase at the point *t_{α}* in time, ${\left.\frac{dϕ}{dt}\right|}_{{t}_{α}}$. The embodiment makes use of the fact that any non-unitary operator, and thereby every imaginary time evolution operator, may be implemented as a unitary operator acting on an extended subspace that includes an auxiliary quantum system. The method is also suitable to be executed on a hybrid analogue-digital quantum devices.

In particular, the description of the system unitary evolution in terms of local operators may comprise a sequence of local unitary operators *u_{N}* · ... . *u*₁ or, a set of the local Hamiltonian operators {*h*₁, ... , *h_{N}*}*.* The imaginary time evolution determined by the local unitary operators *uⱼ* may be *Bⱼ* = *e*^{+*h̃^{j}τ*} or *Bⱼ = e*^{-*h̃^{j}τ*} in one example, wherein *h̃ⱼ* is a local Hamiltonian that generates the local unitary operator according to *uⱼ* = *e^{-ih̃^{j}t}*, and the *τ* is a time. The time *τ* may be arbitrary, but preferable it is chosen small, in particular Σ*ⱼ*∥*hⱼ*∥ *τ* < 1, or Σ*ⱼ*∥*h̃ᵢ*∥ *τ* < 1, respectively. The imaginary time evolution determined by the local Hamiltonian operator *hⱼ* of the set of local Hamiltonian operators may be *Bⱼ* = *e*^{+*hⱼ*τ} or *Bⱼ = e^{-h^{j}τ}* in one example, wherein *τ* is the time.

In the following, to simplify notation, *e*^{±*hⱼ*τ} is used for the imaginary time evolution operator independent of the local operator *Oⱼ* that determines the imaginary time evolution operators. I.e., referring to the above, *hⱼ* may denote a local Hamiltonian of the set of local Hamiltonians of the description of the system unitary evolution or the generator of the local unitary operator *uⱼ,* but the invention is not limited to this. In one example where the quantum system comprises a plurality of qubits and the local Hamiltonian *hⱼ* acts on a number of *kⱼ* qubits, the imaginary time evolution of the subsystem *Sⱼ* under the imaginary time evolution operator *Bⱼ* = *e^{+hⱼτ}* or *Bⱼ* = *e^{-h^{j}τ}* may be realized by preparing the auxiliary quantum system *ASⱼ* associated with the local Hamiltonian operator *hⱼ* in an appropriate initial auxiliary quantum state, by implementing the unitary ${U}_{{\hat{B}}_{j}} = \left(\begin{matrix}{\hat{B}}_{j} & {\left(I-{\hat{B}}_{j}^{†}{\hat{B}}_{j}\right)}^{\frac{1}{2}} \\ {\left(I-{\hat{B}}_{j}^{†}{\hat{B}}_{j}\right)}^{\frac{1}{2}} & - {\hat{B}}_{j}\end{matrix}\right)$ or ${U}_{{\hat{B}}_{j}} = \left(\begin{matrix}{\hat{B}}_{j} & - {\left(I-{\hat{B}}_{j}^{†}{\hat{B}}_{j}\right)}^{\frac{1}{2}} \\ {\left(I-{\hat{B}}_{j}^{†}{\hat{B}}_{j}\right)}^{\frac{1}{2}} & {\hat{B}}_{j}\end{matrix}\right)$ , denoting the normalized operator as *B̂ⱼ* = *Bⱼ*∥*Bⱼ*∥ and wherein ∥·∥ is an operator norm, on the subsystem *Sⱼ* and the auxiliary quantum system *ASⱼ* followed by a measurement of the auxiliary system and an appropriate post-selection in accordance with the measurement outcome. When the quantum system and the auxiliary quantum system are qubit systems, the auxiliary quantum system *ASⱼ* may be prepared in the computational zero state and the independent auxiliary quantum measurement of the auxiliary quantum system *ASⱼ* may be a measurement in the computational basis. Then, the imaginary time evolution of the subsystem *Sⱼ* under the imaginary time evolution operator *Bⱼ* = *e*^{±*hⱼ*τ} may have been achieved when the auxiliary measurement outcome of the auxiliary quantum measurement of the auxiliary quantum system *ASⱼ* is indicative of the computational zero state. If the auxiliary measurement outcome is different from this state, the execution of the quantum algorithm may be terminated and repeated until the desired measurement outcome is achieved.

Calculating the matrix *U_{B̂ⱼ}* requires computing the square root of the matrix *Bⱼ*^{†}*Bⱼ* which in turn requires computing and diagonalizing the matrix *Bⱼ*^{†}*Bⱼ.* When the local Hamiltonian *hⱼ* is k-local, the matrix *Bⱼ*^{†}*Bⱼ* has dimension 2*^{k}* × 2*^{k}.* Then, computing the square root of the matrix *Bⱼ*^{†}*Bⱼ* may be efficiently implemented, for example, on a classical computer when the support of the local Hamiltonian is small enough, e.g., k=2, 3, 4, 5. Thereby, the exact unitary evolution of the subsystem and its associated auxiliary system may be determined.

In one example where the local Hamiltonian *hⱼ* acts on *kⱼ* qubits, the auxiliary quantum system may also comprise *kⱼ* qubits.

In one example of the embodiment, the imaginary time evolution is very short, so that the imaginary time evolution operator may be linearized as *e*^{±*hⱼ*τ} ≈ *I* ± *τhⱼ + O*(*τ*²). This operator may be implemented by use of the "linear combination of unitaries" (LCU) technique, see A. Childs and N. Wiebe "Hamiltonian Simulation using linear combinations of unitary operations", arXiv:1202.5822v1, applied to the operator (*I* ± *τhⱼ*) with suitable normalization as prescribed by the LCU technique. In particular, the imaginary time evolution under each of the local operators *e*^{±*hⱼ*τ} may be achieved by use of an associated auxiliary quantum system that consists of a single qubit and the joint action of the total unitary evolution comprises a controlled application of the local operator *hⱼ* on its corresponding subsystem controlled by the quantum state of the associated auxiliary quantum system.

In one example of the embodiment, the imaginary time evolution under each of the local operators e*e*^{±*hⱼ*τ} may be achieved exactly by an associated auxiliary quantum system that consists of a single qubit and the joint action of the total unitary evolution comprises a controlled application of the local operator *hⱼ* on its corresponding subsystem controlled by the quantum state of the associated auxiliary quantum system. Each associated auxiliary quantum system is rotated in the Bloch sphere before and after the controlled application. The rotation angle and rotation axis on the Bloch sphere of each associated auxiliary quantum system can be chosen such that the imaginary time evolution under each of the local operators *e*^{±*hⱼ*τ} may be implemented exactly.

In one example of the embodiment, the plurality of quantum algorithms comprises for each of a plurality of points in time an associated quantum algorithm that requires for each local operator of the description of the system unitary evolution in terms of local operators an associated auxiliary quantum system, the quantum measurement comprises for each auxiliary quantum system an independent quantum measurement, and wherein depending on an appropriate post-selection of the associated measurement outcome of each auxiliary quantum measurement the action of the total unitary evolution on each subsystem comprises the imaginary time evolution determined by its corresponding local operator, and wherein the joint unitary evolution further comprises an evolution of the quantum system under the system unitary evolution up to the point in time.

According to the example, the plurality of quantum algorithms comprises for each of a plurality of points in time *t_{α}, α* = 1, ... , *L, t*₁ < *t*₂ < ··· < *t_{L}*, an associated quantum algorithm *A_{α}* that is associated with the local operator *Oⱼ* of the description of the system unitary evolution in terms of local operator. In particular, each local operator *Oⱼ* may be a local unitary operator *uⱼ, j* = 1, ..., *N* of a sequence or N local unitary operators *u_{N}*, ... , *u*₁ that may be an exact or an approximate decomposition of the system unitary evolution, i.e., *U_{sys}* = *u_{N}* · ... · *u*₁ or *U_{sys}* ≈ *u_{N}* · ... · *u*₁, or a local Hamiltonian operator *hⱼ* of a set of local Hamiltonian operators {*h*₁, ... , *h_{N}*}, the sum of which is a Hamiltonian H that generates the system unitary evolution or an approximation thereof, i.e., *U_{sys}* = *e^{it Σ^{j}h^{j}}*, or *U_{sys}* ≈ *e*^{*it* Σ}*^{jh^{j}}.* The associated quantum algorithm *A_{α}* requires for each of the N local operators an associated auxiliary quantum system *ASⱼ, j* = 1, ... , *N.* The execution of each quantum algorithm *A_{α}* comprises providing the total quantum system that comprises the quantum system prepared in the initial quantum state and the auxiliary quantum systems, each prepared in an appropriate auxiliary quantum state, evolving the total quantum system under an associated total unitary evolution that comprises applying for each of the auxiliary quantum systems *ASⱼ* that are associated with the respective local operator and the associated subsystem *Sⱼ* a unitary operator, in particular the unitary operator *U_{Bⱼ}* defined above, followed by a measurement of the auxiliary quantum system *ASⱼ* and an appropriated post-selection to thereby obtain an evolution of the subsystem *Sⱼ* under the imaginary time evolution operator determined by the local operator *Oⱼ*, and in particular *Bⱼ* = *e^{+h^{j}τ}* or *Bⱼ* = *e^{-h^{j}τ}.*

In particular, the plurality of quantum circuits may be such that for each of a plurality of points in time *t_{α}, α* = 1, *...,L, t*₁ < *t*₂ < ··· *< t_{L}*, there are first and second quantum algorithms ${A}_{α}^{\pm }$ that are such that, upon an appropriate post-selection, the action of the total unitary evolution on the quantum system comprises the imaginary time evolution according to the imaginary time evolution operator *e^{-h^{N}τ}* ... *e*^{*-h*¹*τ*} for the first quantum algorithm *A_{α̅}* and *e^{+h^{N}τ}* ... *e*^{*+h*¹*τ*} for the second quantum algorithm ${A}_{α}^{+}$. As explained above, each local Hamiltonian *hⱼ* may be one of the local Hamiltonians of the set of local Hamiltonians or a generator of one of the local unitary operators of the sequence of local unitary operators. Furthermore, each of the first and second quantum algorithms ${A}_{α}^{\pm }$ comprises a unitary evolution of the quantum system under the system unitary evolution up to the point *t_{α}* in time, *e^{-iHt^{α}}*. The execution of the plurality of first and second quantum algorithms results in a plurality of computational results that allows to determine a time series of the time derivatives of the phase of the overlap at different points in time, e.g., ${\left.\frac{dϕ}{dt}\right|}_{{t}_{α}}$ *α* = 1, ... , *L.* In particular, the computational results may allow to determine the complex phase *ϕ*(*t*) of the overlap *g*(*t*) = 〈*ψ*|*e^{-iHt}*|*ψ*〉 = *r*(*t*)*e*^{*iϕ*(*t*)} by use of the Cauchy-Riemann equations of complex analysis from which it follows that ${\left.\frac{\partial ϕ \left(t\right)}{\partial t}\right|}_{{t}_{α}} = {\left.\frac{\partial log r \left({t}_{α}-iβ\right)}{\partial β}\right|}_{β = 0} \approx \frac{1}{2 τ} \left(log r\left({t}_{α}-iτ\right)-log r\left({t}_{α}+iτ\right)\right)$, wherein*r*(*t_{α}* ± *iᵣ*) = |〈*ψ*|*e*⁻*^{iHt^{α}}e*^{±*Hτ*}|*ψ*〉|² may be obtained from the measurement outcome of the projective measurement onto the reference quantum state. In one example, the method may further comprise a numerical integration of the time derivatives to obtain the phase.

According to a second aspect of the present invention, there is provided a hybrid quantum-classical computing system, the computing system comprising a classical processor and a quantum processor, wherein the system is configured to:
receive, by the quantum processor, a plurality of quantum algorithms for estimating an overlap of a reference quantum state and an evolved quantum state of a quantum system, the evolved quantum state resulting from an evolution of an initial quantum state of the quantum system under a system unitary evolution having a representation in terms of local operators that act on corresponding local subsystems of the quantum system, wherein each of the quantum algorithms requires at least one dedicated auxiliary quantum system associated with one of the local operators in a one-to-one correspondence;
execute, by the quantum processor, each of the plurality of quantum algorithms to thereby obtain a plurality of computational results indicative of a data series of phase information of the overlap, wherein the execution of each quantum algorithm comprises:
   providing a total quantum system including the quantum system prepared in the initial quantum state and the at least one auxiliary quantum system prepared in an initial auxiliary quantum state;
   evolving the total quantum system under a total unitary evolution, wherein a joint action of the total unitary evolution on the quantum system and the at least one auxiliary quantum system is limited to each auxiliary quantum system and the corresponding subsystem of its associated local operator and determined by the associated local operator;
   applying a projective quantum measurement onto the reference quantum state to the quantum system and applying an auxiliary quantum measurement to the at least one auxiliary quantum system to thereby obtain the computational result;
   receive, by the classical processor, the plurality of computational results, and to estimate, by the classical processor, at least a phase of the overlap on the basis of the computational results.

In one example, the classical computer may estimate the complete overlap and not only its phase.

The hybrid quantum classical computing system according to the second aspect of the present invention may be used to carry out the method according to the first aspect of the present invention.

According to a third aspect of the present invention, there is provided a computer program product comprising instructions, which, when the computer program product is executed on a quantum processor, cause the quantum processor to carry out the method according to the first aspect of the present invention. The computer program product according to the third aspect of the present invention may be used in the hybrid quantum-classical computing system according to the second aspect of the present invention.

According to a fourth aspect of the present invention, there is provided a computer-readable storage medium comprising instructions, which, when executed by a quantum processor, cause the quantum processor to carry out the method according to the first aspect of the present invention. In particular, the computer-readable storage medium may be a non-transitory storage medium.

According to a fifth aspect of the present invention, there is provided a data set representing a plurality of computational results obtainable by the method according to any one of claims 1 - 15. In one example, the data set may comprise for at least one quantum algorithm *Aⱼ* of the plurality of quantum algorithms a representation of at least one measurement outcome of the projective quantum measurement onto the reference quantum state corresponding to one of a plurality of shots of the quantum algorithm. In certain examples, the data set comprises, in addition, for the at least one quantum algorithm *Aⱼ* of the plurality of quantum algorithms a representation of at least one measurement outcome of the auxiliary quantum measurement corresponding to one of a plurality of shots of the quantum algorithm. In one example, the data set may comprise for each quantum algorithm *Aⱼ* of the plurality of quantum algorithms a representation of at least one measurement outcome of the projective quantum measurement onto the reference quantum state corresponding to one of a plurality of shots of the quantum algorithm. In certain examples, the data set comprises, in addition, for each quantum algorithm *Aⱼ* of the plurality of quantum algorithms a representation of at least one measurement outcome of the auxiliary quantum measurement corresponding to one of a plurality of shots of the quantum algorithm. In certain examples, the data set may comprise for each quantum algorithm *Aⱼ* of the plurality of quantum algorithms and each shot of a plurality of M > 1 shots of the execution of the quantum algorithm a representation of the measurement outcome of the projective quantum measurement onto the reference quantum state. Additionally, the data set may comprise for each shot the measurement outcome of the auxiliary quantum measurement.

In yet another example, the data set comprises for at least one quantum algorithm a representation of an estimator value of an observable derived from the measurement outcome of the projective quantum measurement onto the reference state and/or the measurement outcome of the auxiliary quantum measurement. In one example, the data set comprises for each quantum algorithm a representation of an estimator value of an observable derived from the measurement outcome of the projective quantum measurement onto the reference state and/or the measurement outcome of the auxiliary quantum measurement.

In the following, the invention will be further described by way of example with reference to the drawings in which
- Figure 1: is a representation of a quantum algorithm for the Hadamard test known in the art;
- Figs 2a-2c: are representations of quantum algorithms of a first embodiment of the method according to the first aspect of the present invention;
- Figs. 3a-3c: are representations of further quantum algorithms of a first example of the first embodiment of the method according to the first aspect of the present invention;
- Figs. 4a-4c: are representations of further quantum algorithms of a second example of the method according to the first aspect of the present invention;
- Figs. 5a-5b: are representations of quantum algorithms of a second embodiment of the method according to the first aspect of the present invention;
- Figure 6a: is a schematic representation of a quantum algorithm of a third embodiment of the method according to the first aspect of the present invention where the auxiliary quantum systems are not shown;
- Figure 6b: schematically represents the implementation of the imaginary time evolution part of Fig. 6a by use of auxiliary quantum system;
- Figure 7: schematically represents a hybrid quantum classical computing system according to the second aspect of the present invention.

In the following, embodiments and examples of the methods and devices for estimating an overlap 〈*ψ_{ref}*|*ψₑᵥₒₗᵥ*〉 of a reference quantum state |*ψ_{ref}*〉 and an evolved quantum state |*ψₑᵥₒₗᵥ*〉 of a quantum system according to the present invention are presented exemplarily for the case of qubits. To be more precise, in the following examples the quantum system is a system of a plurality of K>1 qubits and the auxiliary quantum system is a qubit system with at least one qubit. However, the invention is not limited to qubits, and it is clear for those skilled in the art how the embodiments and examples work for other quantum mechanical systems. The evolved quantum state |*ψ_{ref}*〉 results from an evolution of an initial quantum state |*ψᵢₙᵢ*〉 of the quantum system under a system unitary evolution *U_{sys},* |*ψₑᵥₒₗᵥ*〉 = *U_{sys}*|*ψᵢₙᵢ*〉. In one example, *U_{sys}* = *e^{-iHt}*, wherein H is a Hamiltonian generating the unitary evolution and t is the time. In some examples, t=1, but the invention is not limited to this. For ease of representation, the embodiments and examples are presented for the case that the reference quantum state |*ψ_{ref}*〉 is identical to the initial quantum state |*ψᵢₙᵢ*〉 , and the notation |*ψᵢₙᵢ*〉 = |*ψ_{ref}*〉 = |*ψ*〉 is used in the following. For those skilled in the art, the generalization to the case where the reference quantum state is different from the initial quantum state is clear. The overlap *g* = 〈*ψ*|*U_{sys}*|*ψ*〉 = *re^{iϕ}* is a complex number and may be expressed in terms of an amplitude r and a phase 0 ≤ *ϕ* < 2*π*.

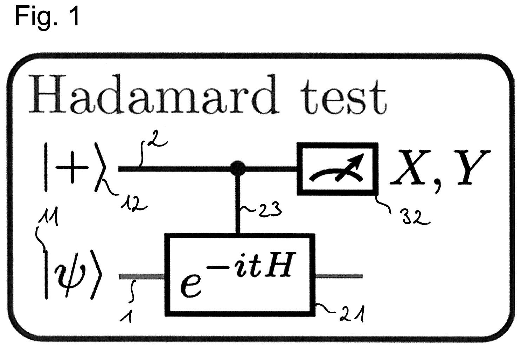

Figure 1 is a representation of a quantum algorithm of the known Hadamard test for estimating the overlap. A quantum system 1 is prepared in an initial quantum state |*ψ*〉 (reference sign 11). The Hadamard test requires a single auxiliary quantum system 2 which is a single qubit prepared in an initial auxiliary quantum state $\left|+\right〉 = \frac{1}{\sqrt{2}} \left(\left|0\right〉+\left|1\right〉\right)$ (reference sign 12). The total quantum system of the quantum system 1 and the auxiliary quantum system 2 evolves under a total unitary evolution that comprises a controlled application 23 of the system unitary 21 to the quantum system 1 controlled by the quantum state 12 of the auxiliary quantum system 2. That is, the total quantum state of the quantum system 1 and the auxiliary quantum system 2 prepared in the total initial quantum state |Ψ*ₜₒₜ*〉 = |+〉|*ψ*〉 evolves as $\left|{Ψ}_{tot}\right〉 \to \frac{1}{\sqrt{2}} \left(\left|0\right〉\left|ψ\right〉+\left|1\right〉{U}_{sys}\left|ψ\right〉\right)$ . Finally, an auxiliary quantum measurement 32 that measures the Pauli-X and Pauli-Y operators is applied to the auxiliary quantum system 2 and the overlap *g* may be determined on the basis of the measurement outcomes of these measurements.

As it is apparent from Figure 1, the standard Hadamard test requires a global control of the quantum system 1 by the single auxiliary quantum system 2.

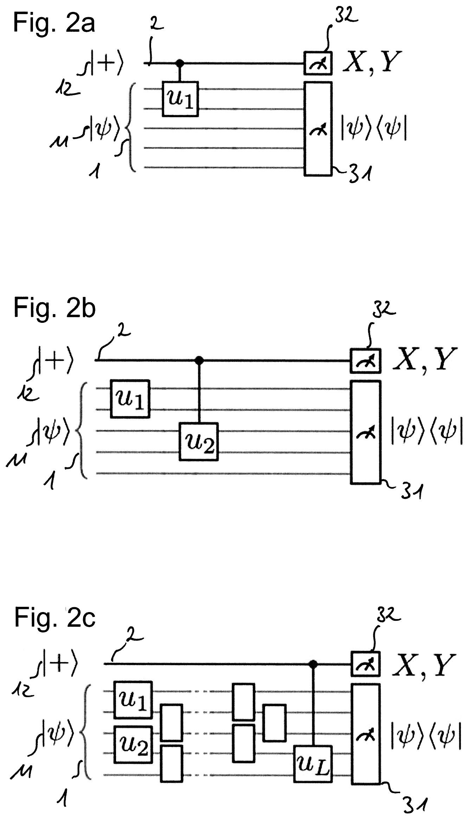

Below, embodiments of the method according to the first aspect of the present invention are described with reference to Figs. 2 - 6b. Each embodiment of the method comprises executing a plurality of quantum algorithms to thereby obtain a plurality of computational results indicative of a data series of phase information of the overlap. Each quantum algorithm may be executed by a quantum processor in one example.

In the following, a first embodiment of the method according to the first aspect of the present invention is described with reference to Figs. 2a-4c. The first embodiment of the method is particularly well-suited for digital quantum processors that allow for an application of a sequence of quantum gates. In the first embodiment, the description of the system unitary evolution *U_{sys}* comprises a sequence of local unitary operators according to *u_{N_{gates}}* · *u_{Ngates}*-1 · ... · *u*₂ · *u*₁, wherein each *uⱼ, j* = 1, ... , *N_{gates}* is a local unitary operator and *N_{gates}* is the number of local quantum operations. The local unitary operator *uⱼ* acts on a corresponding subsystem *Sⱼ* of k qubits, preferably at most k=2 qubits. In particular, the local operators may be understood as quantum gates, for example, single or two-qubit gates. The description of the system unitary evolution in terms of the sequence of local unitary operators may correspond to an exact decomposition of the system unitary evolution, i.e., *U_{sys}* = *u_{N_{gates}}* · *u_{Ngates}*-1 · ... · *u*₂ · *u*₁ or it may correspond to an approximation of *U_{sys}*, i.e., *U_{sys}* ≈ *u_{N_{gates}}* · *u_{Ngates}*-1 · ... · *u*₂ · *u*₁.

The method according to the first embodiment comprises executing a quantum algorithm *Aⱼ* for each local operator *uⱼ* of the *N_{gates}* local operators of the description of the system unitary evolution. The quantum algorithms *A*₁, ..., *A_{N_{gates}}* form a series of quantum algorithms from an initial quantum algorithm *A*₁ to a final quantum algorithm *A_{N_{gates}}.* Each quantum algorithm *Aⱼ* requires a single auxiliary quantum system associated with a local operator *uⱼ*. In the embodiment, the single auxiliary quantum system is a single qubit. The execution of each quantum algorithm (see Figs. 2a-4c) comprises preparing the quantum system 1 in the initial quantum state |*ψ*〉 (reference sign 11) and preparing the single auxiliary quantum system which is a single qubit in the initial auxiliary quantum state $\left|+\right〉 = \frac{1}{\sqrt{2}} \left(\left|0\right〉+\left|1\right〉\right)$ (reference sign 12). Then, the total quantum system, including the quantum system 1 and the auxiliary quantum system 2, is evolved under a total unitary evolution followed by applying a projective quantum measurement 31 onto the reference quantum state |*ψ*〉〈*ψ*| to the quantum system 1 and applying an auxiliary quantum measurement 32 to the single auxiliary quantum system to thereby obtain a computational result. In particular, the auxiliary quantum measurement is a measurement of the Pauli-X and Pauli-Y operators.

The series of quantum algorithms *A*₁, ... , *A_{N_{gates}}* comprises for each of the local operators *uⱼ* an associated quantum algorithm *Aⱼ*. The initial quantum algorithm *A*₁ of the series of quantum algorithms *A*₁, *..., A_{N_{gates}}* is shown in Fig. 2a and comprises an initial total unitary evolution that consists of the controlled application of the first local unitary operator *u*₁ of the description of the system unitary evolution to its corresponding subsystem *S*₁ controlled by the quantum state of the auxiliary quantum system 2. That is, the local operator *u*₁ acts on its corresponding subsystem *S*₁ controlled by the quantum state |+〉 of the auxiliary quantum system.

The series of quantum algorithms *A*₁, *...,A_{N_{gates}}* of the first embodiment is such that a subsequent total unitary evolution of a subsequent quantum algorithm *A*_{*j*+1} of the series of quantum algorithms *A*₁, *..., A_{N_{gates}}* differs from a preceding total unitary evolution of a preceding quantum algorithm *Aⱼ* of the series of quantum algorithms *A*₁, ...,*A_{N_{gates}}* in that a control is removed from a previously controlled local unitary operator *uⱼ* associated with the preceding quantum algorithm *Aⱼ* and a controlled application of a local unitary operator *u*_{*j*+1} associated with the subsequent quantum algorithm *A*_{*j*+1} to its corresponding subsystem *S*_{*j*+1} is added at a position in accordance with the sequence of local unitary operators.

Possible quantum algorithms of the series of quantum algorithms *A*₁, ...,*A_{N_{gates}}* of the first embodiment are explained with reference to Figs. 2b-3c. Figure 2b is an example of a second quantum algorithm *A*₂ of the series of quantum algorithms. The second quantum algorithm *A*₂ is associated with the second local unitary operator *u*₂ of the sequence of local unitary operators. As one may take from Figure 2b, the local control of the first unitary operator *u*₁ is removed and the local unitary operator *u*₁ is applied to its corresponding subsystem *S*₁ without any control. Furthermore, a controlled application of the second local unitary operator *u*₂ associated with the second quantum algorithm *A*₂ to its corresponding subsystem *S*₂ is added at its position in accordance with the sequence of local unitary operators.

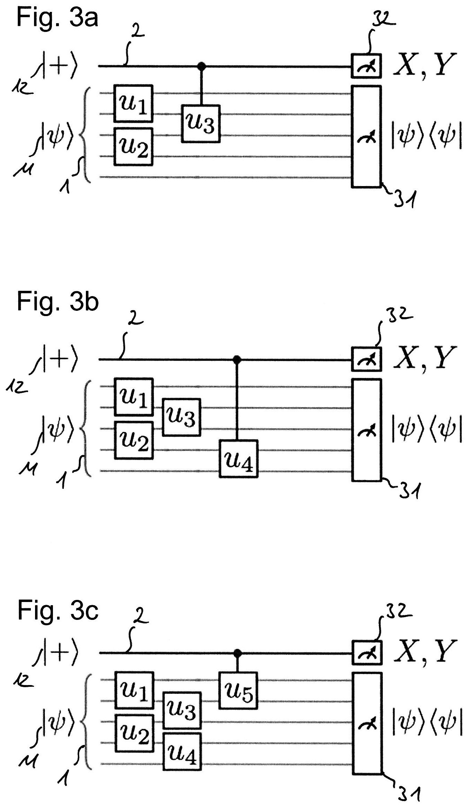

Figures 3a-3c are representations of further quantum algorithms of the sequence of quantum algorithms *A*₁, *... , A_{N_{gates}}* of a first example of the first embodiment of the method according to the first aspect of the present invention wherein the quantum algorithm *Aⱼ* is associated with the local unitary operator *uⱼ, j* = *3, ..., N_{gates},* and the initial quantum algorithm *A*₁ and the second quantum algorithm *A*₂ are as in Figures 2a and 2b, respectively. Figure 3a depicts a third quantum algorithm *A*₃ associated with the third local operator *u*₃ of the sequence of local unitary operators. Compared to the second quantum algorithm *A*₂ shown in Figure 2b, the control of the second local unitary operator *u*₂ is removed, and a controlled application of the third local unitary operator *u*₃ to its corresponding subsystem *S*₃ is added at its position in accordance with the sequence of local unitary operators. Figure 3b depicts a fourth quantum algorithm *A*₄ of the series of quantum algorithms *A*₁, *... , A_{N_{gates}}* that is associated with the fourth local unitary operator *u*₄ of the series of local unitary operators. Compared to the third quantum algorithm *A*₃ shown in Figure 3a, the control of the third local unitary operator *u*₃ is removed, and a controlled application of the fourth local unitary operator *u*₄ to its corresponding subsystem *S*₄ is added at its position in accordance with the sequence of local unitary operators. Figure 3c depicts a fifth quantum algorithm *A*₅ of the series of quantum algorithms *A*₁, *... , A_{N_{gates}}* that is associated with the fifth local unitary operator *u*₅ of the series of local unitary operators. Compared to the fourth quantum algorithm *A*₄ shown in Figure 3b, the control of the fourth local unitary operator *u*₄ is removed, and a controlled application of the fifth local unitary operator *u*₅ to its corresponding subsystem *S*₅ is added at its position in accordance with the sequence of local unitary operators.

Figure 2c shows the L-th quantum algorithm *A_{L}* associated with the L-th local unitary operator *u_{L}.* As one may take from Figure 2c, the local unitary operators *u*₁, ..., *u*_{*L*-1} are applied to their corresponding subsystems *S*₁, *... , S*_{*L*-1} at their positions in accordance with the sequence of local unitary operators followed by a controlled application of the local unitary *u_{L}* to its corresponding subsystem *S*_{*L*-1} controlled by the quantum state of the auxiliary quantum system.

By executing the L-th quantum algorithm (see Figure 2c), a computational result is obtained which is indicative of the expectation values $\left〈{σ}_{x}⊗|ψ\right〉 \left〈\left.ψ\right|\right〉 = Re \left[{g}_{L}{g}_{L - 1}^{∗}\right]$ for the Pauli-X measurement and $\left〈{σ}_{y}⊗|ψ\right〉 \left〈\left.ψ\right|\right〉 = Im \left[{g}_{L}{g}_{L - 1}^{∗}\right]$ for the Pauli-Y measurement, wherein *g_{L} =* 〈*ψ*|(*u_{L} · u*_{*L*-1} · ... · *u*₂ · *u*₁)|*ψ*〉 may be understood as the overlap after the L-th gate. In one example, the computational results may comprise for each quantum algorithm estimator values of the expectation values 〈*σₓ* ⊗ |*ψ*〉〈*ψ*|〉 and 〈*σ_{y}* ⊗ |*ψ*〉〈(*ψ*|〉, The estimator values may obtained by averaging over the measurement outcomes of the M shots of the quantum algorithm in one example. In one example, the computational results may comprise for each quantum algorithm the measurements outcomes of the M shots that allow to derive estimator values of 〈*σₓ* ⊗ |*ψ*〉〈*ψ*|〉 and 〈*σ_{y}* ⊗ |*ψ*〉〈*ψ*|〉. The overlap of the reference quantum state and the evolved quantum state may then be obtained from the following recursive formula: $\left〈ψ\left|{U}_{sys}\right|ψ\right〉 = {g}_{{N}_{gates}} = \frac{{g}_{{N}_{gates}} {g}_{{N}_{gates} - 1}^{∗}}{{g}_{{N}_{gates} - 1}^{∗} {g}_{{N}_{gates} - 2}} ⋅ \frac{{g}_{{N}_{gates} - 2} {g}_{{N}_{gates} - 3}^{∗}}{{g}_{{N}_{gates} - 3}^{∗} {g}_{{N}_{gates} - 4}} ⋅ … ⋅ \frac{{g}_{2} {g}_{1}^{∗}}{{g}_{1}^{∗}}$ . Certain instances of the embodiment may comprise a calculation of the phase of the overlap via the recursive formula.

Considering the phase information (*ϕ_{L}* - *ϕ*_{*L*-1}) of the quantity ${g}_{L} {g}_{L - 1}^{∗} = {r}_{L} {r}_{L - 1} {e}^{i \left({ϕ}_{L}-{ϕ}_{L - 1}\right)}$ , the formula also applies to only the phase information: *ϕ_{Ngates}* = (*ϕ_{N_{gates}}* - *ϕN*_{*gates*-1}) = (*ϕ_{Ngates}*-2 - *ϕ_{Ngates}*-1) + (*ϕ_{Ngates}*-2 - *ϕ_{Ngates}*-3) - (*ϕ_{Ngates}*-4 - *ϕ_{Ngates}*-3) *+* ... *+*(*ϕ₂* - *ϕ*₁) - (0 - *ϕ*₁). The absolute values *r_{L}* can be measured separately and combined with the phase information obtained through the formula. To obtain the absolute value of a Loschmidt echo *r* = |〈*ψ*|U*_{sys}*|*ψ*〉|, one prepares the system in the initial state |*ψ*〉, applies by the action of the unitary operator *U_{sys}*, and measures the system in a basis containing the initial state. Dividing the number of successful projections onto the initial state is an estimator for the absolute value squared: *r*² = 〈*ψ*|*U_{sys}*|*ψ*〉〈*ψ*|*U*^{†}*_{sys}*|*ψ*〉. Measuring the absolute value of the Loschmidt echo is well-known in the art of quantum computation.

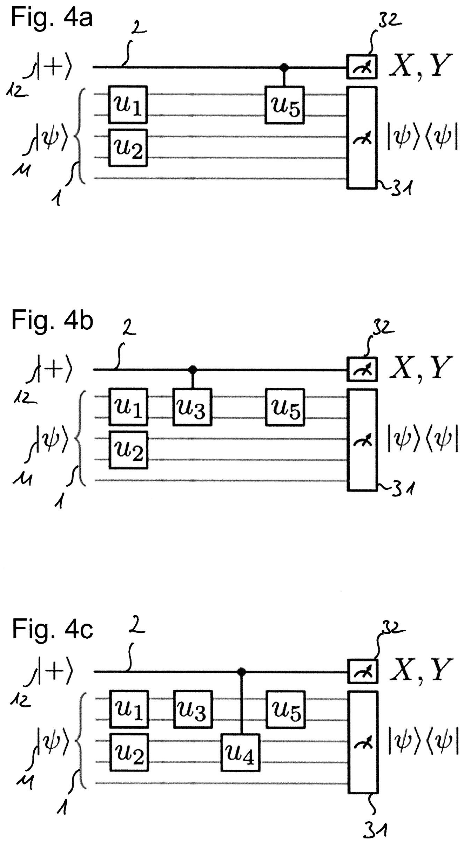

Instead of the quantum algorithms shown in Figure 3a-3c, the series of quantum algorithms *A*₁, ... *, A_{N_{gates}}* of second example of the first embodiment may comprise the quantum algorithms shown in Fig. 4a-4c. In the second example, the third quantum algorithm *A*₃ (see Fig. 4a) is associated with the fifth local unitary operator *u*₅ of the sequence of local unitary operators, the fourth quantum algorithm *A*₄ (see Fig. 4b) is associated with the third local unitary operator *u*₃ of the sequence of local unitary operators and the fifth quantum algorithm *A*₅ (see Fig. 4c) is associated with the fourth local unitary operator *u*₄ of the sequence of local unitary operators.

Figure 4a depicts the third quantum algorithm *A*₃ associated with the fifth local operator *u*₅ of the sequence of local unitary operators. Compared to the second quantum algorithm *A*₂ shown in Figure 2b, the control of the second local unitary operator *u*₂ is removed, and a controlled application of the fifth local unitary operator *u*₅ to its corresponding subsystem *S*₅ is added at its position in accordance with the sequence of local unitary operators. Figure 4b depicts the fourth quantum algorithm *A*₄ of the series of quantum algorithms *A*₁, ... , *A_{N_{gates}}* that is associated with the third local unitary operator *u*₃ of the series of local unitary operators. Compared to the third quantum algorithm *A*₃ shown in Figure 4a, the control of the fifth local unitary operator *u*₅ is removed, and a controlled application of the third local unitary operator *u*₃ to its corresponding subsystem *S*₃ is added at its position in accordance with the sequence of local unitary operators. Figure 4c depicts a fifth quantum algorithm *A*₄ of the series of quantum algorithms *A*₁, ..., *A_{N_{gates}}* that is associated with the fourth local unitary operator *u*₄ of the series of local unitary operators. Compared to the fourth quantum algorithm *A*₄ shown in Figure 4b, the control of the third local unitary operator *u*₃ is removed, and a controlled application of the fourth local unitary operator *u*₄ to its corresponding subsystem *S*₄ is added at its position in accordance with the sequence of local unitary operators. A similar recursive formula as the one above for calculating the overlap may be obtained for this second example, and the overlap may be calculated on the basis of the computational results of the execution of the series of quantum algorithms.

As one may take from the second example of the first embodiment, the quantum algorithms may be optimized by selecting the order of the controlled application of the local unitary operators to thereby reduce the circuit depth. In particular, when the initial quantum state 11 is a product state, one may consider a decomposition of the quantum system 1 into two disjoint systems which are first evolved independently from each other under local unitary operators of the sequence of local unitary operators that only have support on one of the two systems before a local controlled operation that acts on both of the disjoint systems is applied.

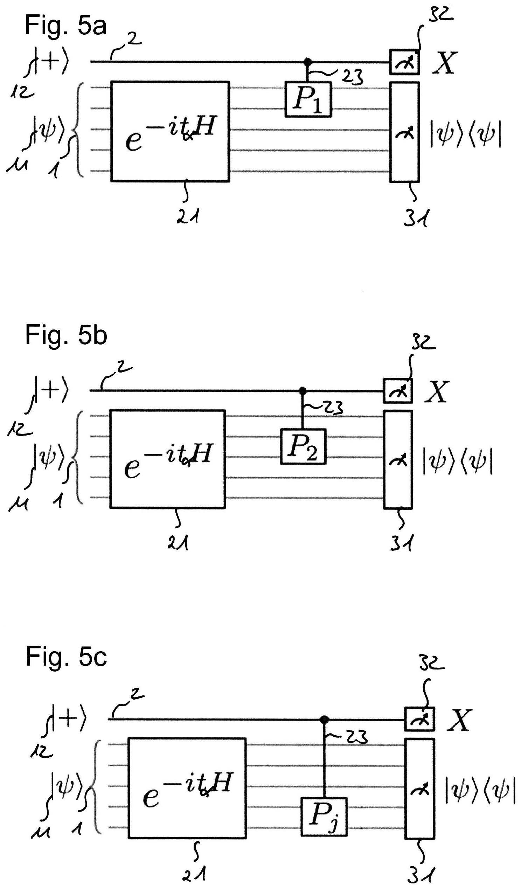

In the following, a second embodiment of the method according to the first aspect of the present invention is explained with reference to Figures 5a-5c. The method comprises executing a plurality of quantum algorithms to thereby obtain a plurality of computational results indicative of a data series of phase information of the overlap. Each quantum algorithm requires a single auxiliary quantum system associated with one local Hamiltonian operator *hⱼ* of a set of local Hamiltonian operators {*h*₁, ... , *h_{N_{H}}*} of a representation of the system unitary evolution in terms of local operators. The local Hamiltonian operator *hⱼ*, *j* = 1, ..., *N_{H}* acts on a corresponding subsystem *Sⱼ* of k qubits, preferably at most k=2 qubits. The sum of the local Hamiltonians may generate the system unitary evolution or an approximation thereof, i.e., *U_{sys}* = *e^{-iHt}* or *U_{sys}* ≈ *e^{-iHt}*, wherein $H = {\sum }_{j = 1}^{{N}_{H}} {h}_{j}$ In particular, each local Hamiltonians is proportional to a Pauli string in the embodiment, i.e., *hⱼ* = *λⱼP̂ⱼ,* wherein *λⱼ* is a scalar and ${\hat{P}}_{j} = {⊗}_{q = 1}^{{N}_{H}} {P}_{q}$, wherein *P_{q}* ∈ {*I_{q}, X_{q}, Y_{q}, Z_{q}*} is either the Pauli-X,-Y, or -Z operator or the identity operator acting on the qubit *q,* and only k of the *N_{H}* operators are different from the identity. I.e., *P̂ⱼ* is a Pauli string acting on at most k qubits of the K qubits of the quantum system. The auxiliary quantum system is one single qubit in the embodiment.

The plurality of quantum algorithms comprises for each local Hamiltonian *hⱼ* and each of a plurality of points in time *t_{α}, α* = 1, ... , *T*, wherein *t*₁ *<* ··· *< t_{T}* an associated quantum algorithm *A_{j,α}.* Executing the quantum algorithm *A_{j,α}* comprises providing a total quantum system including the quantum system 1 prepared in the initial quantum state |*ψ*〉 14 (reference sign 11) and the one auxiliary quantum system 2 which is a single qubit prepared in the initial auxiliary quantum state |+〉 (reference sign 12). Then, the total quantum system 3 is evolved under a total unitary evolution associated with the quantum algorithm *A_{j,α}* and a projective quantum measurement |*ψ*〉〈*ψ*| (reference sign 31) onto the reference quantum state is applied to the quantum system 1 and an auxiliary quantum measurement 32 is applied to the auxiliary quantum system 2 to measure the Pauli-X operator. Thereby, the computational result of the quantum algorithm is obtained.

The total unitary evolution of the quantum algorithm *A_{j,α}* associated with the local Hamiltonian *hⱼ* = *λⱼPⱼ* and the point in time *t_{α}* evolves the quantum system 1 under the system unitary evolution 21 up to the point in time *t_{α}*, that is, *e^{-iHt^{α}}*, followed by the controlled application 23 of the local Pauli string *P̂_{J}* of the local Hamiltonian to its corresponding subsystem *Sⱼ* controlled by the quantum state of the auxiliary quantum system 2. For each quantum algorithm, the computational result obtained from the execution of the quantum algorithm is indicative of $\left〈{σ}_{x}⊗|ψ\right〉 \left〈\left.ψ\right|\right〉 = \frac{1}{2} \left〈\left.ψ\left({t}_{α}\right)\right|\left\{\hat{{P}_{j}},\left|ψ\right〉\left〈ψ\right|\right\}\left|ψ\left({t}_{α}\right)\right.\right〉 = {a}_{j} \left({t}_{α}\right)$*.* In one example, the computational results may comprise for each quantum algorithm an estimator value of the expectation value 〈*σₓ* ⊗ |*ψ*〉〈*ψ*|〉. In one example, the estimator value may be obtained by averaging over the measurement outcomes of the quantum algorithm. In one example, the computational result may comprise for each quantum algorithm the measurements outcomes (i.e., the measurement outcome of the projective quantum measurement onto the reference quantum state and the auxiliary quantum measurement) of the M shots that allow to derive an estimator value of 〈*σₓ* ⊗ |*ψ*〉〈(*ψ*|〉. From the general formula for the time derivative of the overlap *g*(*t*) = 〈*ψ*|*e^{-iHt}*|*ψ*〉 = *r*(*t*)*e*^{*iϕ*(*t*)}, it is straightforward to see that the time derivative of the phase *ϕ*(*t*) of the overlap at the time *t_{α},* ${\left.\frac{dϕ \left(t\right)}{dt}\right|}_{t = {t}_{α}}$*,* for the embodiment is a linear combination of the coefficients *aⱼ*(*t_{α}*) associated with the time *t_{α}*, ${\left.\frac{dϕ \left(t\right)}{dt}\right|}_{t = {t}_{α}} = - \frac{1}{2 r {\left(t\right)}^{2}} {\sum }_{j = 1}^{{N}_{H}} {λ}_{j} {a}_{j} \left({t}_{α}\right)$*.* Then, the phase of the overlap may be obtained by a numerical integration in certain examples. The determination of the amplitude r(t) is well-known in the art of quantum computation: one may prepare the system in the initial state |*ψ*〉, apply by the action of the system unitary operator *U_{sys}*, and measure the system in a basis containing the initial state. Dividing the number of successful projections onto the initial state is an estimator for the absolute value squared: *r*² = 〈*ψ*|*U_{sys}*|*ψ*〉〈*ψ*|*U*^{†}*_{sys}*|*ψ*〉*.* The determination of the amplitude does not require controlled operations. Certain examples of the embodiment comprise determining the amplitude r(t).

The method according to the second embodiment of the method according to the first aspect of the present invention may also be implemented on a hybrid analogue-digital quantum processor that allows to implement the unitary evolution of the quantum system under the system unitary up to the point in time *t_{α}* in an analogous way.

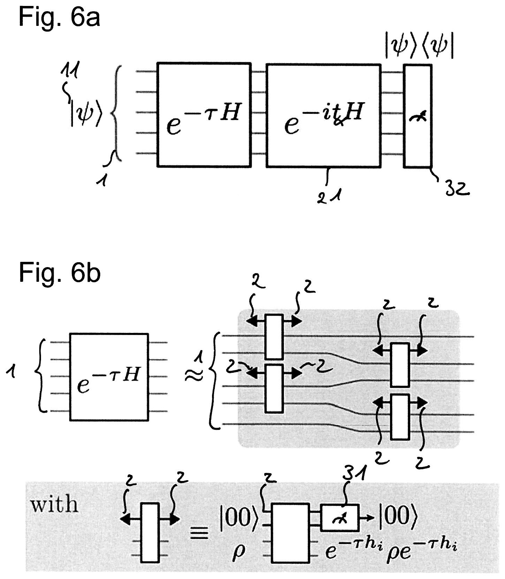

In the following, a third embodiment of the method according to the first aspect of the present invention is described with reference to Figures 6a and 6b. The description of the system unitary evolution in terms of local operators *Oⱼ* comprises a sequence of local unitary operators *u_{N} ·* ... . *u*₁ wherein each local unitary operator *uⱼ* acts only on the corresponding subsystem *Sⱼ* of the quantum system or a sequence of the local Hamiltonians {*h*₁, *...* , *h_{N}*}, wherein each local Hamiltonian *hⱼ* acts only on the corresponding subsystem *Sⱼ* of the quantum system. In the first case, the sequence of local unitary operators may correspond to an exact decomposition of the system unitary evolution or an approximation thereof, i.e., *U_{sys}* = *u_{N}* · ... . *u*₁ or *U_{sys}* ≈ *u_{N}* · ... . *u*₁. In the latter case, the system unitary evolution or an approximation thereof may be generated by a Hamiltonian that is a sum of the local Hamiltonians, i.e., *U_{sys}* = *e^{-iHt}*, or ., *U_{sys}* ≈ *e^{-iHt}*, wherein $H = {\sum }_{j = 1}^{N} {h}_{j}$. I.e., each of the local operators *Oⱼ* of the description of the system unitary evolution is a local Hamiltonian operator *hⱼ* or a local unitary operator *uⱼ* generated by a local Hamiltonian *h̃ⱼ* according to *e^{-ih̃^{j}t}.* The plurality of quantum algorithms of the third embodiment comprises for each of a plurality of points in time *t_{α}* first and second associated quantum algorithms ${A}_{α}^{\pm }$ that both require an auxiliary quantum system for each of the local operators *Oⱼ* of the description of the system unitary operator. Depending on an appropriate post-selection of the auxiliary measurement outcomes, the total unitary evolution of the first and second quantum algorithms comprises an imaginary time evolution *e^{+Hτ}*, respectively *e^{-Hτ}*, on the quantum system. The imaginary time evolution is implemented by use of the auxiliary quantum systems, as every non-unitary operation on a system can be implemented as a unitary operation on an extended system. τ is a very small time. In particular, as *τ* is a very small time, the imaginary time evolution operators *e*^{+*Hτ*} and *e^{-Hτ}* are approximated by the sequences *e^{+h^{N}τ}e*^{+*h_{N}*-1*τ*} ... *e*^{*+h*²}*^{τ}e*^{*+n*¹*τ*} and *e^{-h^{N}τ}e^{h_{N}τ}* ... *e*^{*-h*²}*^{τ}e*^{*-h*¹*τ*}, or *e^{+h̃^{N}τ}e*^{*+h̃h_{N}*1*τ*} ... *e*^{*+h̃*2}*^{τ}e*^{*+h̃*1*τ*} and *e^{-h̃^{N}τ}e^{-h̃h_{N}τ}* ... *e*^{*-h̃*²}*^{τ}e*^{*-h̃*¹*τ*} respectively. Each of the first and second quantum algorithm ${A}_{α}^{\pm }$ further comprises a unitary evolution of the quantum system 1 under the system unitary up to the point in time *t_{α}.*

The execution of each quantum algorithm ${A}_{α}^{\pm }$ comprises providing a total system including the quantum system 1 prepared in the initial quantum state 11 and each auxiliary quantum system 2 prepared in a predetermined initial quantum state. In the example shown in Fig. 6b, each auxiliary quantum system 2 comprises two qubits prepared in the state |00〉. Then the joint action of the total unitary evolution on the quantum system 1 and the plurality of auxiliary quantum systems 2 is limited to each auxiliary quantum system 2 and the corresponding subsystem *Sⱼ* of its associated local operator *hⱼ* and is such that depending on an appropriate post selection of the measurement outcome of an auxiliary quantum measurement 31 applied to the associated auxiliary quantum system, the subsystem *Sⱼ* of the quantum system has evolved under an imaginary time evolution with the evolution operator *e*^{±*hⱼ*τ} or *e*^{±}*^{h̃^{j}τ}.* In the general part of the description it is described how to construct a unitary operation *U_{Bⱼ}* on the auxiliary quantum system and the corresponding subsystem *Sⱼ* so as to obtain an imaginary time evolution of the subsystem *Sⱼ* under the imaginary time evolution operator *e*^{±*hⱼ*} or *e*^{±*hjτ*} depending on an appropriate post-selection of the measurement outcome of the auxiliary quantum system. Alternatively, the imaginary time evolution under each of the local operators *e*^{±*hⱼ*} or *e*^{±*hⱼ*} may be achieved by use of an associated auxiliary quantum system that consists of a single qubit and the joint action of the total unitary evolution comprises a controlled application of the local operator *hⱼ* or *h̃ⱼ* on its corresponding subsystem controlled by the quantum state of the associated auxiliary quantum system (see also general part of the description).

When all auxiliary quantum systems 2 are measured, the imaginary time evolution *e^{+Ht}*, respectively *e^{-Hτ}*, of the quantum system may be achieved depending on an appropriate post-selection. Otherwise, the quantum algorithm is stopped and its run is repeated. In one example, the auxiliary quantum measurement is a projective measurement onto the computational basis. Examples for implementing the imaginary time evolution operator are presented below.

The method further comprises applying a projective quantum measurement 32 onto the reference quantum state |*ψ*〉〈*ψ*| to the quantum system 1. The computational results obtained with this projective measurement may comprise for each quantum algorithm, e.g., the measurement outcome of the projective quantum measurement for every shot of the quantum algorithm or an estimator value of 〈*ψ*|*e^{-iHt^{α}}e*^{±*Hτ*}|*ψ*〉 obtained from the plurality of shots. These computational results allow to determine the complex phase *ϕ*(*t*) of the overlap *g*(*t*) *=* 〈*ψ*|*e^{-iHt}*|*ψ*〉 = *r*(*t*)*e*^{*iϕ*(*t*)} by use of the Cauchy-Riemann equations of complex analysis from which it follows that ${\left.\frac{\partial ϕ \left(t\right)}{\partial t}\right|}_{{t}_{α}} = {\left.\frac{\partial log r \left({t}_{α}-iβ\right)}{\partial β}\right|}_{β = 0} \approx \frac{1}{2 τ} \left(log r\left({t}_{α}-iτ\right)-log r\left({t}_{α}+iτ\right)\right)$, wherein *r*(*t_{α} ± iτ*) *=* |〈*ψ*|*e^{-iHt^{α}}e*^{±*Hτ*}|*ψ*〉|² is obtained from the measurement outcome of the projective measurement onto the reference quantum state. Certain examples of the embodiment comprise the computation of the complex phase from a numerical integration, e.g., by a classical computer.

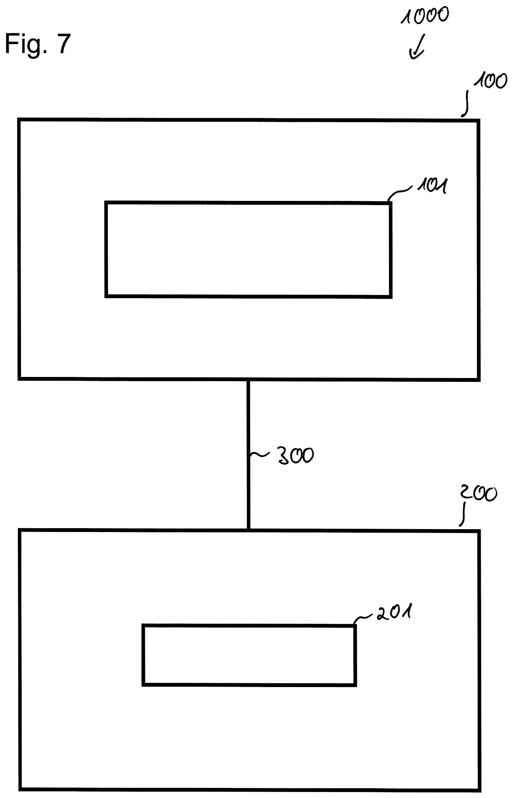

Figure 7 is a schematic representation of a hybrid quantum-classical computing system 1000 according to the second aspect of the present invention. The hybrid quantum-classical computing system 1000 comprises a quantum processor 100 and a classical computer 200 with a classical processor 201 connected via a network 300. The quantum processor 100 is configured to receive, e.g., via the network 300, a plurality of quantum algorithms for estimating an overlap 〈*ψ_{refr}*|*ψₑᵥₒₗᵥ*〉 of a reference quantum state |*ψ_{ref}*〉 and an evolved quantum state |*ψₑᵥₒₗᵥ*〉 of a quantum system. The evolved quantum state results from an evolution of an initial quantum state |*ψᵢₙᵢ*〉 of the quantum system under a system unitary evolution *U_{sys} = e^{-iHt}*, having a representation in terms of local operators that act on corresponding local subsystems of the quantum system. Each of the quantum algorithms requires at least one dedicated auxiliary quantum system associated with one of the local operators in a one-to-one correspondence. The plurality of quantum algorithms may be, e.g., the quantum algorithms of the first to third embodiment explained above with reference to Figs. 2a - 6b. In one example, the quantum system is a qubit system.

The quantum processor 100 is configured to execute each of the plurality of quantum algorithms to thereby obtain a plurality of computational results indicative of a data series of phase information of the overlap. The execution of each quantum algorithm comprises providing, by the quantum processor 100, a total quantum system 101 including the quantum system prepared in the initial quantum state and the at least one auxiliary quantum system prepared in an initial auxiliary quantum state. Then, the quantum processor 100 evolves the total quantum system 101 under a total unitary evolution, wherein a joint action of the total unitary evolution on the quantum system and the at least one auxiliary quantum system is limited to each auxiliary quantum system and the corresponding subsystem of its associated local operator and determined by the associated local operator, and applies a projective quantum measurement onto the reference quantum state to the quantum system and applies an auxiliary quantum measurement to the at least one auxiliary quantum system to thereby obtain the computational result.

The quantum processor 100 is configured to provide the computational results to the classical computer 200, e.g., via the network 300. The classical computer is configured to receive the plurality of computation results, and to estimate, at least a phase of the overlap on the basis of the computational results.

### Technical notes

The following technical notes present technical details in relation to the invention. References to figures in the technical notes refer to the figures presented therein. Furthermore, the application is originally filed in color, and any reference to color in the technical notes refers to the colors as originally filed.

### 0. ABSTRACT

Quantum phase estimation plays a central role in quantum simulation as it enables the study of spectral properties of many-body quantum systems. Most variants of the quantum phase estimation algorithm require the application of the global unitary evolution conditioned on the state of one or more auxiliary qubits, which poses a significant challenge for current quantum devices. In this work, we present an approach to quantum phase estimation that uses only locally controlled operations, resulting in a significantly reduced circuit depth. At the heart of our approach are efficient routines to measure the complex phase of the expectation value of the time-evolution operator, the so-called Loschmidt echo, for both circuit dynamics and Hamiltonian dynamics. By tracking changes in the phase during the dynamics, the routines trade circuit depth for an increased sampling cost and classical postprocessing. Our approach does not rely on reference states and is applicable to any efficiently preparable state, regardless of its correlations. We provide a comprehensive analysis of the sample complexity and illustrate the results with numerical simulations. Our methods offer a practical pathway for measuring spectral properties in large many-body quantum systems using current quantum devices.

### 1. INTRODUCTION

Quantum simulation is a promising application of quantum computing, enabling the study of many-body quantum systems beyond classical computational capabilities [1-7]. Efficiently simulating quantum processes on quantum hardware is expected to drive advances in condensed matter physics, quantum chemistry, and materials science [8, 9], providing insights into strongly correlated materials, molecular structures, and non-equilibrium dynamics. A widely considered approach is quantum phase estimation (QPE), which enables precision eigenvalue estimation and serves as a foundation for quantum algorithms in simulation and metrology [10-12].

The QPE algorithm relies on two key components. First, one must prepare a quantum state with significant overlap with the eigenstates of interest, which depends on the specific application. Second, the phase information must be extracted. While textbook QPE requires deep circuits with globally controlled operations, more hardware-efficient alternatives such as statistical QPE or virtual filtering have been proposed to reduce the circuit depth [13-18]. These latter approaches rely on measuring the complex expectation values of multiple powers of a unitary operation, which can be obtained using a Hadamard test [Fig. 1(a)]. However, these methods require global control, thereby imposing substantial hardware challenges, including an increased circuit complexity, and additional resources such as swap operations and large GHZ states. As a result, implementing phase estimation remains highly challenging on current devices.

In this work, we introduce methods to measure the expectation value of a unitary operation for entangled quantum states without requiring global control operations [Fig. 1(b)]. We introduce one general method for arbitrary unitary, and two specialized methods for cases in which the unitary de- 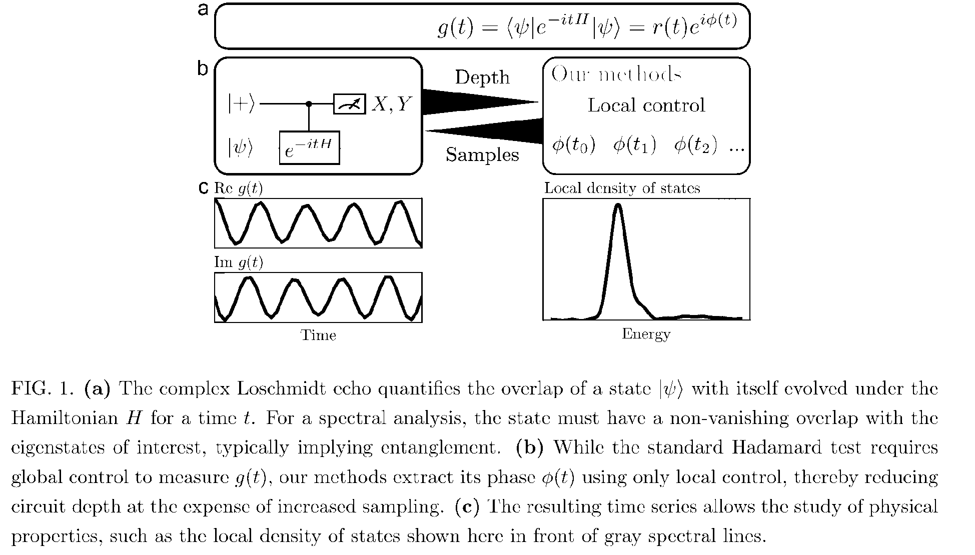 scribes Hamiltonian dynamics, which is particularly relevant for quantum simulation. The complex overlap of a state |*ψ*〉 evolved for a time *t* with itself is quantified by the *Loschmidt echo* 〈*ψ*|*e^{-itH}*|*ψ*〉*.* Our techniques relate phase information of Loschmidt echoes at different times, which can be achieved using only local control. Access to the time-series for the Loschmidt echo then allows for the spectroscopy of quantum many-body states through classical postprocessing [Fig. 1(c)].

Our methods differ from alternative strategies to avoid global control in that they require no assumptions on the initial state and provide rigorous bounds on the sample complexity. Leveraging interference between the state of interest and a reference eigenstate with known energy could in principle avoid global control, feasible only if suitable superposition states can be prepared (cf. [14]). A previous proposal relying on short imaginary time evolution (ITE) is restricted to initial product states [19]. Another interesting approach leverages classical signal processing techniques for reconstructing the phase, but has a heuristic nature, with unclear practical performance [20]. We provide a more detailed review of these and related methods later in this manuscript.

This paper is structured as follows. First, we present our main results, which are a family of three methods for measuring the expectation value of a unitary operator (Sec. 2). We include a calculation of the sample complexities, discuss practical considerations, and describe simplifications for cases when the initial state is a product state. In Sec. 3, we present a numerical case study including sampling errors and hardware noise for the non-integrable quantum Ising model with an entangled initial state, and discuss the mitigation of errors. We include a brief review of existing methods to measure Loschmidt echoes without global control in Sec. 4, before discussing our results and concluding in Sec. 5.

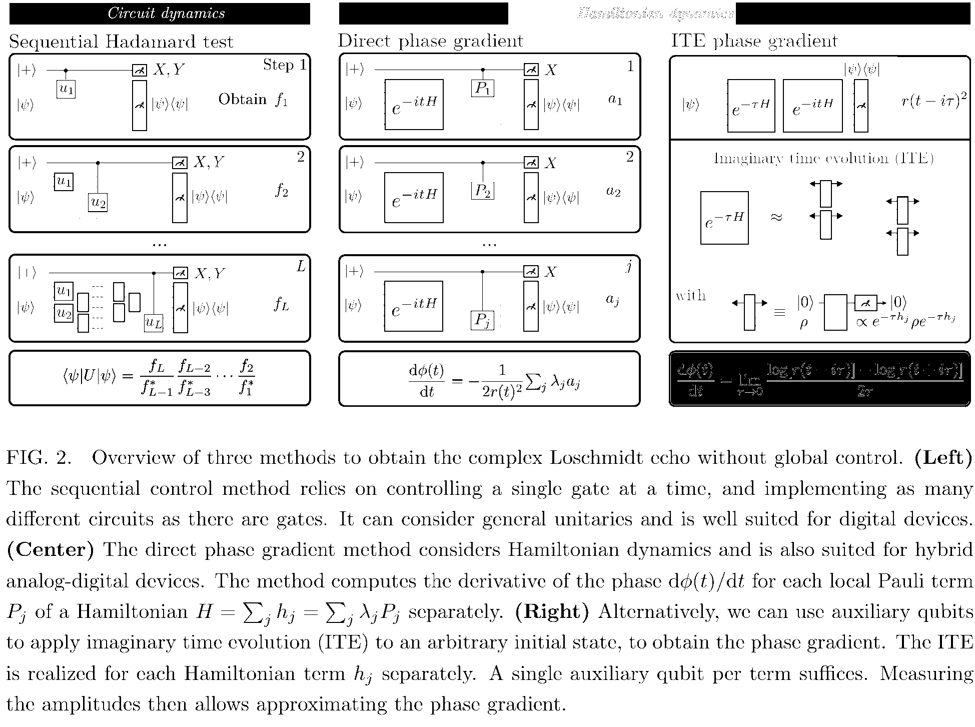

### 2. LOCAL MEASUREMENT SCHEMES

We present our main result, a family of three methods for estimating the complex expectation value of a unitary operation without global control. The first method, which we refer to as the sequential Hadamard test, applies to arbitrary quantum circuits composed of *N*_{gates} local gates. The method proceeds by executing shorter circuits involving 1 ≤ *L* ≤ *N*_{gates} gates, where only a single gate is controlled in each circuit. By sampling from each circuit, it is possible to estimate the Loschmidt echos ${g}_{L} = {r}_{L} {e}^{{iϕ}_{L}} = \left〈ψ\right| {U}_{L} \left|ψ\right〉 ,$ (1) where *U_{L}* is the unitary corresponding to the first *L* gates.

The second and third methods (direct phase gradient and ITE phase gradient) concern the Loschmidt echo associated with the unitary *U*(*t*) = *expi*(-*iHt*)*,* generated by a Hamiltonian *H.* In this case, the Loschmidt echo $g \left(t\right) = r \left(t\right) {e}^{iϕ \left(t\right)} = \left〈ψ\right| U \left(t\right) \left|ψ\right〉 .$ (2) is a continuous function of the time t. The two methods rely on the insight that the derivative of the phase, *dϕ*(*t*)/d*t*, can be measured without global control. In the direct phase gradient method,

**TABLE I. Overview of methods for estimating the phase of a Loschmidt echo for entangled states. The ITE method uses local block-encodings. We consider the total sample complexity to compute the Loschmidt echo at time t for a system of n qubits within additive error ε. Loschmidt echos at intermediate times are also computed, specific times points can vary between the methods. We use lower bounds for the amplitude rₘᵢₙ := minⱼ{rⱼ}, and r_{±,min} := minₜ[r(t + iτ), r(t - iτ)]. A p^{th}-order product formula is considered, and the integer s depends on the numerical integration method, with s = 2 corresponding to Simpson's method.**

| **Method** | **Sample complexity** |
|---|---|
| Seq. Hadamard test | $O \left({\left(nt/ϵ\right)}^{2 + 2 / p}{r}_{min}^{- 2}\right)$ |
| Direct phase gradient | $O \left({\left(nt/ϵ\right)}^{2 + 1 / s}{r}_{min}^{- 4}\right)$ |
| ITE phase gradient | $O \left({n}^{2 + 1 / s}{\left(t/ϵ\right)}^{3 + 3 / 2 s}{r}_{\pm , min}^{- 2}\right)$ |

we accomplish this by controlled application of individual local Hamiltonian terms. In the ITE phase gradient method, we instead apply a short imaginary-time evolution (ITE). In contrast to previous work [19], we realize the ITE using local block encodings, which allows us to extend the approach beyond product states to arbitrary initial states. Both methods additionally require unconditional evolution under the Hamiltonian, which may be implemented using analog or digital quantum simulation techniques.

We note that all three methods can be readily generalized to compute the expectation value of products of unitaries [19], which also provides access to quantities of the form 〈*ψ'*|*U*|*ψ*〉 for different states |*ψ*〉 and |*ψ'*〉. The generalized form is relevant, for instance, to compute not only the cigenenergies using phase estimation but also the expectation values of observables in the associated eigenstates [14].

A visual overview of our methods is presented in Fig. 2. We describe each method in detail and analyze its sampling cost to compute the Loschmidt echo *g*(*t*) to within additive error *ε*. To make the methods comparable, we consider a product formula approximation to the Hamiltonian evolution for the sequential Hadamard test. The results are summarized in Table I. The squared absolute error of the Loschmidt echo is given by |Δ*g*(*t*)|² = [Δ*r*(*t*)]² + [*r*(*t*)Δ*φ*(*t*)]²*.* In the table, we conservatively bound all amplitudes *r* ≤ 1. Since the phase error must satisfy *r*Δ*ϕ* < *ε*, the sampling cost can be lower in practice when the amplitude is small. Each method yields not only the value of *g*(*t*) but also a full time series up to time *t* [21]. For a comparison, a global Hadamard test would require 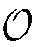 (*t*/*ε*²) samples are required to compute a time series of a Loschmidt echo up to time *t*.

### 2.1. Sequential Hadamard test

Our first method can be applied to any unitary of the form $U = {u}_{{N}_{gates}} ⋯ {u}_{2} {u}_{1} ,$ (3) where each *uₗ* is a local gate. In the context of quantum simulation, the circuit may approximate the evolution under a Hamiltonian, although this is not necessary. For instance, the method also applies to Floquet dynamics with large time steps, where an explicit Hamiltonian representation may not be available [22, 23].

The sequential Hadamard test proceeds iteratively. We begin by applying only the first Trotter gate *u*₁, controlled by an auxiliary qubit. Then, the first Trotter gate *u*₁ is applied without control, followed by the second Trotter gate *u*₂ with control. Next, the third Trotter gate is controlled, and so forth. The complex Loschmidt echo is obtained recursively from the information of each previous step as summarized in the left panel of Fig. 2.

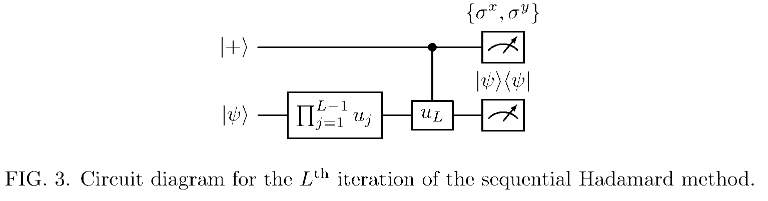

More explicitly, the *L*^{th} iteration consists of repeated measurements of the output of the circuit shown in Fig. 3. Projecting the state register onto the initial state and measuring the auxiliary qubit yields [24] $\left〈{σ}^{x}⊗\left|ψ\right〉\left〈ψ\right|\right〉 = Re \left({g}_{L}{g}_{L - 1}^{∗}\right) ,$ (4) $\left〈{σ}^{y}⊗\left|ψ\right〉\left〈ψ\right|\right〉 = Im \left({g}_{L}{g}_{L - 1}^{∗}\right) ,$ (5) where *g_{L}* is defined in Eq. (1) with *U_{L}* = *u_{L}* ··· *u*₂*u*₁. The projection onto the initial state can be realized by reversing the preparation of |*ψ*〉 and performing a computational basis measurement (see Appendix A for details). We observe that the complex argument of *g_{L}g**_{*L*-1} is equal to the phase difference *ϕ_{L} - ϕ*_{*L*-1}. Hence, these measurements allow us to infer the change of the phase caused by the *L*^{th} gate and we are able to reconstruct the Loschmidt echo as ${g}_{L} = \frac{{g}_{L} {g}_{L - 1}^{∗}}{{g}_{L - 1}^{∗} {g}_{L - 2}} ⋅ \frac{{g}_{L - 2} {g}_{L - 3}^{∗}}{{g}_{L - 3}^{∗} {g}_{L - 4}} ⋅ … ⋅ \frac{{g}_{2} {g}_{1}^{∗}}{{g}_{1}^{∗}} .$ (6) Here, we used the fact that *g*₀ = 1 assumed that *L* is even, although a similar expression holds for odd *L*. We emphasize that each numerator and denominator is measured separately, requiring only local control.

In practice, the finite number of measurements leads to a statistical uncertainty in the values of the observables in Eqs. (4) and (5), which in turn leads to an uncertainty in the Loschmidt echo. Assuming that we measure each observable *M_{L}* times, the variance in ${g}_{L} {g}_{L - 1}^{∗}$ is given by ${\left(Δ\left[{g}_{L}{g}_{L - 1}^{∗}\right]\right)}^{2} = \frac{1}{{M}_{L}} \left({r}_{L}^{2}+{r}_{L - 1}^{2}-{r}_{L}^{2}{r}_{L - 1}^{2}\right) .$ (7) The variance of the measurement can, in principle, be made smaller by aligning the measurement basis with the phase, although this does not affect the asymptotic dependence of the required number of samples on the desired accuracy.

To compute the propagation of the error in Eq. (6), we assume that the multiplicative error for each term is small, $Δ \left[{g}_{L}{g}_{L - 1}^{∗}\right] / {r}_{L} {r}_{L - 1} ≪ 1$. Since the samples obtained from separate measurements are statistically independent, the multiplicative error of the Loschmidt echo is given by [25] $\frac{{\left(Δ{g}_{L}\right)}^{2}}{{r}_{L}^{2}} \approx {\sum }_{l = 1}^{L} \frac{{\left(Δ\left[{g}_{l}{g}_{l - 1}^{∗}\right]\right)}^{2}}{{\left({r}_{l}{r}_{l - 1}\right)}^{2}} \leq {\sum }_{l = 1}^{L} \frac{1}{{M}_{l}} \left(\frac{1}{{r}_{l - 1}^{2}}+\frac{1}{{r}_{l}^{2}}\right) .$ (8) We choose the number of measurements for a given value of *L* as ${M}_{l} = {Lr}_{L}^{2} \left(1/{r}_{l - 1}^{2}+1/{r}_{l}^{2}\right) / {ϵ}^{2}$ such that each term in the sum contributes ${ϵ}^{2} / {Lr}_{L}^{2}$ and the error in *g_{L}* is bounded from above by *ε*. The condition $\left(Δ\left[{g}_{L}{g}_{L - 1}^{∗}\right]/\left({r}_{L}{r}_{L - 1}\right)≪1\right.$ is satisfied if *ε* ≪ *r_{L}*, which applies in the regime of interest since estimating the phase of *g_{L}* is only meaningful if *ε* is smaller than *r_{L}.* We thus require ${M}_{tot} = {\sum }_{l = 1}^{L} {M}_{l} \leq 2 {\left({Lr}_{L}/ϵ {r}_{min}\right)}^{2}$ samples to determine *g_{L}* within additive error *ε*, where *r*ₘᵢₙ = *minₗ*{*rₗ*}.

To obtain all *g_{L}* for 1 ≤ *L* ≤ *N*_{gates} with an error less than *ε*, it is necessary to maximize each *Mₗ* over all possible values of *L.* Using the trivial upper bound *r_{L}* ≤ 1, we obtain ${M}_{tot} = O \left({N}_{gates}^{2} {ϵ}^{- 2} {r}_{min}^{- 2}\right)$ (9) for the total sample complexity. Owing to the dependence on *r_{L}*, improved bounds may be available in specific cases, including when the Loschmidt echo decays monotonically with the number of applied gates.

While this approach works for any circuit, we consider the particular application to Hamiltonian dynamics, allowing us to compare the sample complexity with the subsequent two methods (see Table I). Given a local Hamiltonian *H* acting on *n* qubits, the time evolution operator *exp(-iHt)* may be implemented using a *p*^{th} order Suzuki-Trotter decomposition, requiring *N*_{gates} = 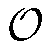 ((*nt*)^{1+1/p}/*ε*^{1/*p*}) gates [26, 27]. This results in the sample complexity ${M}_{tot} = O \left({\left(nt/ϵ\right)}^{2 + 2 / p}{r}_{min}^{- 2}\right)$. We highlight that the method returns not only the Loschmidt echo at time t but also at intermediate times corresponding to the Trotter time step. The method is compatible with other methods of digital quantum simulation, including randomized compiled circuits, which may be advantageous for quantum chemistry applications [16, 28].

Above, we added the gates to the circuit according to a fixed sequence. One can show, however, that the gates can be added in any order. Whenever a new gate is added, it is inserted into the correct location of the circuit and its application is controlled by an auxiliary qubit, while all previously added qubits are applied unconditionally. This freedom can be used to reduce the sample complexity, in particular, when the initial state is a product state. If we remove all gates of the circuit that entangle two subsystems, we can effectively cut the circuit in half along the time dimension. Continuing to cut the remaining system, eventually, we are left with computing the complex Loschmidt echo of a few-qubit system, which can be done on a classical computer. In particular, for translationally invariant systems, the remaining subsystems can be identical, leading to significant resource savings. This circuit cutting technique may also be useful for initial states with exponentially decaying correlations, such as a matrix product state with a constant bond dimension, or for states prepared using shallow circuits. We refer to Appendix C for more details.

### 2.2. Direct phase gradient

The second method pertains to the complex Loschmidt echo *g*(*t*) *=* 〈*ψ*| exp(*-iHt*)|*ψ*〉. We assume that the Hamiltonian is a sum of local terms, which, without loss of generality, may be expressed as $H = {\sum }_{j = 1}^{K} {λ}_{j} {P}_{j}$*.* Here, each *Pⱼ* is a Pauli operator acting nontrivially on a constant number of qubits and *λⱼ* is a real coefficient bounded in magnitude by a constant. We further assume that there are *K =* 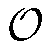 (*n*) terms in the sum, as is the case for any finite-ranged interaction on a lattice in d dimensions. The method is agnostic to the implementation of the time-evolution operator. The Hamiltonian dynamics may be realized using any digital quantum simulation method or by means of analog simulation, rendering this approach ideally suited to emerging hybrid analog-digital quantum platforms [29, 30].

If the Loschmidt echo is nonzero, its complex phase may be expressed as *ϕ*(*t*) = Im[log*g*(*t*)], where the branch of the logarithm can be chosen such that *ϕ*(*t*) continuous and differentiable. Direct differentiation yields $\frac{d ϕ \left(t\right)}{dt} = - \frac{1}{2 r {\left(t\right)}^{2}} \left〈ψ\right| {e}^{iHt} \left\{H, \left|ψ\right〉\left〈ψ\right|\right\} {e}^{- itH} \left|ψ\right〉 ,$ (10) where {*A, B*} = *AB + BA* denotes the anti-commutator. Since {*H,* |*ψ*〉 〈*ψ*|} is Hermitian, the right-hand side can be viewed as the expectation value of an observable. To measure it using local operations, we employ the local decomposition of the Hamiltonian. In particular, by measuring the expectation value 〈*σ^{x}* ⊗ |*ψ*)(*ψ*|〉 at the end of the circuit shown in Fig. 4, we obtain ${a}_{j} \left(t\right) = \frac{1}{2} \left〈ψ\left(t\right)\right| \left\{{P}_{j}, \left|ψ\right〉\left〈ψ\right|\right\} \left|ψ\left(t\right)\right〉 .$ (11) By implementing this circuit for each term in the Hamiltonian and separately measuring *r(t),* we are able to compute the phase gradient d*ϕ*(*t*)/d*t* = - Σ*ⱼλⱼaⱼ*(*t*)/*r*(*t*)². The phase is thus obtained by numerically integrating the phase gradient using intermediate measurements at small time intervals with the initial condition *ϕ*(0) = 1. This procedure is summarized in the central panel of Fig. 2.

For the error analysis, we initially focus on the error in the complex phase. We denote the discrete set of times at which d*ϕ*(*t*)/d*t* is to be evaluated by {*tₗ*} with *l* ∈ {1, 2, ... , *N*ₜᵢₘₑₛ} and introduce the shorthands ${ϕ}_{l}^{′} = d ϕ \left(t\right) / {\left.dt\right|}_{t = {t}_{l}} , {r}_{l} = r \left({t}_{l}\right)$, and *a_{j,l} = aⱼ*(*tₗ*). We further define the survival probability ${p}_{l} = {r}_{l}^{2}$*.* The variance of ${ϕ}_{l}^{′}$ can be expressed in terms of the variance of the 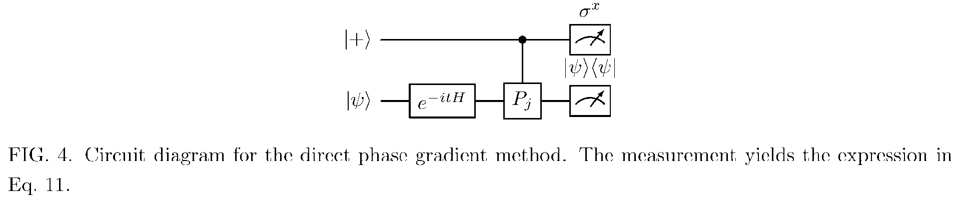 measured quantities as ${\left(Δ{ϕ}_{l}^{′}\right)}^{2} \approx \frac{1}{{p}_{l}^{2}} {\sum }_{j = 1}^{K} {λ}_{j}^{2} Δ {a}_{j , l}^{2} + {\left({ϕ}_{l}^{′}\right)}^{2} \frac{Δ {p}_{l}^{2}}{{p}_{l}^{2}} ,$ (12) where we assumed that all errors are sufficiently small for the error propagation formula to apply [25]. If we run ${M}_{j , l}^{\left(a\right)}$ repetitions of the circuit in Fig. 4, the variance of *a_{j,l}* is given by $Δ {a}_{j , l}^{2} = \frac{1}{2 {M}_{j , l}^{\left(a\right)}} \left({p}_{l}+{\left|\left〈ψ\right|{P}_{j}{e}^{- {iHt}_{l}}\left|ψ\right〉\right|}^{2}-2{a}_{j , l}^{2}\right) ,$ (13) To measure *pₗ*, we remove the auxiliary qubit and the controlled Pauli operation from the circuit. The probability that the projection onto |*ψ*〉 succeeds is equal to *pₗ* and Δ*pₗ* follows from the variance of the corresponding binomial distribution. With ${M}_{l}^{\left(r\right)}$ measurements, it is given by $Δ {p}_{l}^{2} = {p}_{l} \left(1-{p}_{l}\right) / {M}_{l}^{\left(r\right)}$.

To arrive at more transparent expressions, we bound these variances by $Δ {a}_{j , l} \leq 1 / {M}_{j , l}^{\left(a\right)}$ and $Δ {p}_{l}^{2} \leq {p}_{l} / {M}_{l}^{\left(r\right)}$. We further note that $\left|{ϕ}_{l}^{′}\right| = O \left(n\right)$, assuming that the Loschmidt echo is nonva-nishing [19]. Hence, the measurement numbers ${M}_{l}^{\left(r\right)} = O \left({n}^{2}/\left({η}^{2}{p}_{l}\right)\right)$ and ${M}_{j , l}^{\left(a\right)} = O \left(n/\left({η}^{2}{p}_{l}^{2}\right)\right)$ are sufficient to compute the phase gradient $Δ {ϕ}_{l}^{′}$ with additive error *η*. The total number of measurements for a single time step then satisfies ${M}_{l} = {\sum }_{j = 1}^{K} {M}_{j , l}^{\left(a\right)} + {M}_{l}^{\left(r\right)} = O \left({\left(n/{ηp}_{l}\right)}^{2}\right)$.

In addition to the statistical uncertainty in the phase gradient, the estimation of the final phase incurs a numerical integration error. Denoting the integration error by Δ*ϕ_{I}*, the total error satisfies $Δ ϕ \leq {N}_{times}^{1 / 2} η + Δ {ϕ}_{I}$, where we chose the same statistical error *η* at each time step and used the fact that the statistical errors are uncorrelated. For the Newton-Cotes formula [31], the integration error is Δ*ϕ_{I}* = 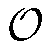 (*nt*(*t*/*N*ₜᵢₘₑₛ)^{2*s*}), where s is an integer that depends on the order of the formula (*s* = 1 for the trapezoidal rule, *s* = 2 for Simpson's rule) [32]. Hence, *N*ₜᵢₘₑₛ = 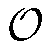 ((*nt*/*ε*)¹²*^{s}t*) discrete time points and *Mₗ* = 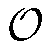 ((*nt*/*ε*)^{2+1/}*^{2s}t*⁻¹*pₗ*⁻²) respective measurements are sufficient to ensure that Δ*ϕ* ≤ *ε*. The total number of measurements is thus bounded by ${M}_{tot} = {\sum }_{l = 1}^{{N}_{times}} {M}_{l} = O \left({\left(nt/ϵ\right)}^{2 + 1 / s}{r}_{min}^{- 4}\right) .$ (14) We compare this result with the sample complexity of the other methods in Table I.

The direct phase gradient method can be used without auxiliary qubits if the states $\left|{φ}_{j}^{\pm }\right〉 = \left(\left|ψ\right〉\pm {P}_{j}\left|ψ\right〉\right) / \sqrt{2}$ can be prepared. This is the case, for instance, if |*ψ*〉 is a product state. The quantities *aⱼ* can be obtained from $2 {a}_{j} = {\left|\left〈ψ\right|{e}^{- iHt}\left|{ϕ}_{j}^{+}\right〉\right|}^{2} - {\left|\left〈ψ\right|{e}^{- iHt}\left|{ϕ}_{j}^{-}\right〉\right|}^{2}$, where the two terms on the right-hand side can be measured by evolving $\left|{ϕ}_{k}^{\pm }\right〉$ and performing a projective measurement onto |*ψ*〉.

Instead of decomposing the Hamiltonian into local Pauli terms, in some cases it might be beneficial to prepare the state |*ψ_{H}*〉 = *H*|*ψ*〉 / ∥*H*|*ψ*∥. While this can generally be achieved with global block-encoding techniques [33, 34], these techniques are highly demanding in practice. For some special cases, however, there are relatively simple ways to prepare |*ψ_{H}*〉*.* In particular, for a geometrically-local, one-dimensional system, |*ψ_{H}*〉 can be written as a matrix product state of constant bond dimension. Then, the state $\left|φ\right〉 = \left(\left|ψ\right〉+\left|{ψ}_{H}\right〉\right) / \sqrt{2}$ can be prepared exactly with a sequential quantum circuit in 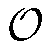 (*n*) depth [35]. Also allowing for mid-circuit measurements and classical feedforward operations might significantly shorten the circuit depth for preparing |*ψ_{H}*〉 (cf. [36, 37]). This would allow to effectively reduce the sample complexity by a factor of 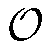 (*n*²) at the expense of a slightly deeper circuit.

### 2.3. ITE phase gradient

Our third method also works by computing the phase gradient, but uses a short ITE instead of local control of the Hamiltonian terms. This approach was originally proposed in Ref. [19], where the initial states were, however, restricted to states with only short-ranged correlations. We generalize this result to arbitrary initial states by realizing the ITE with local block-encodings. Like the direct phase gradient, this method is independent of the implementation of the real-time dynamics and is thus suitable for hybrid analog-digital devices.

The method relies on promoting the time t to a complex variable *z* = *t - iβ*. If the Loschmidt echo does not vanish, then log *g*(*z*) = log*r*(*z*)*+iϕ*(*z*) is an analytic function. The Cauchy-Riemann equations then allows us to relate the phase gradient to the derivative of log *r*(*z*) with respect to imaginary time according to $\frac{d ϕ \left(t\right)}{d t} = {\left.\frac{\partial log r \left(t-iβ\right)}{\partial β}\right|}_{β = 0} .$ (15) We will approximate the right-hand side by the finite difference [log *r*(*t* - *iτ*) - log *r*(*t + iτ*)]/2*τ* for a small imaginary time *τ*. Hence, the phase gradient can be computed from the quantities *r*(*t*±*iτ*)² *=* |〈*ψ*|*e^{-ilH}e^{±τH}*|*ψ*〉|², which correspond to survival probabilities following a short initial ITE.

It was shown in Ref. [19] that if |*ψ*〉 is a product state, the state *e*^{±*τH*}|*ψ*〉 (up to normalization) can be approximately prepared using a constant-depth unitary circuit. For entangled states with longer-ranged correlations, however, this approach becomes intractable. Here, we instead directly implement *e*^{±*τH*} using block-encoding techniques [33, 34], whereby we embed the non-unitary operator in a unitary acting jointly on the system and a set of auxiliary qubits. The non-unitarity is induced by postselecting a specific measurement outcome of the auxiliary qubits. The postselection probability can be made large because the imaginary time *τ* is small. The key steps of the ITE phase gradient method are summarized in the right panel of Fig. 2.

We realize the ITE for a geometrically local Hamiltonian *H =* Σ*ⱼλⱼPⱼ*, where *Pⱼ* are (multi-qubit) Pauli operators, by a first-order Trotter decomposition. Standard block-encoding techniques [33, 34] for implementing non-unitary operators require a doubling of the local Hilbert space, i.e., for a two-local Pauli operator *Pⱼ* two auxiliary qubits would be needed. It is also possible, though, to only use a single auxiliary qubit per Pauli operator. In particular, we consider the circuit in Fig. 5, which is in the spirit of linear combination of unitaries [38].

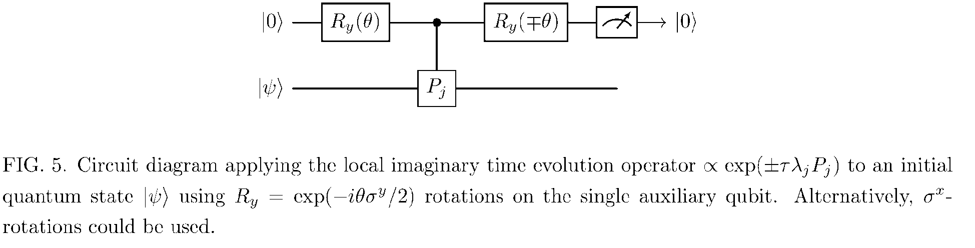

After postselecting on the auxiliary qubit being in the |0〉 state, the circuit prepares the (unnormalized) state $\left[{cos}^{2}\left(θ/2\right)I\pm {sin}^{2}\left(θ/2\right){P}_{j}\right] \left|ψ\right〉 .$ (16) By comparing this expression with the identity ${e}^{\pm {τλ}_{j} {P}_{j}} = cosh \left({τλ}_{j}\right) I \pm sinh \left({τλ}_{j}\right) {P}_{j} ,$ (17) we can see that the postselected circuit thus implements the non-unitary operation *e*^{*-τ*|*λj*}|*e*^{±τ*λj*}P^{j} if we choose *θ* such that cos²(*θ*/2) = *e*^{-τ|*λj*}| cosh(*τλⱼ*) and sin²(*θ*/2) = *e*^{-*τ*|*λj*}| sinh(*τ*|λ*ⱼ*|). By applying a similar circuit to each term in the Hamiltonian, we are thus able to apply the operation Π*ⱼe*^{*-τ*|λ*λj*}|*e*^{±}*^{τλ^{j}}Pⱼ* ≈ *e*^{-*τ*|Σ|*λj*}|*e*^{±}*^{τH}.*

To determine the sample complexity, we first analyze the postselection overhead from the local block-encodings. The success probability of each measurement is given by the norm squared of the state in Eq. (16). For small values of *τ*, the probability that all measurements succeed is thus given by ${P}_{succ} = 1 - 2 τ {\sum }_{j} \left(\left|{λ}_{j}\right|∓{λ}_{j}\left〈ψ\right|{P}_{j}\left|ψ\right〉\right) + O \left({τ}^{2}\right) .$ (18) As there are 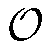 (*n*) Hamiltonian terms, the failure probability for a short ITE is *P*_{fail} *=* 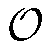 (*n_{T}*). If any one of the auxiliary qubits heralds failure, the protocol is restarted. To achieve a constant success probability, independent of system size, we require that the imaginary-time duration decreases with system size, *τ* = 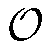 (1/*n*)*.* This is consistent with the requirement that *τ* be small limit the Trotter error, which we discuss in more detail below.

As for the previous method, shot noise leads to a statistical uncertainty in the phase gradient ${\left.{ϕ}_{l}^{′}=dϕ\left(t\right)/dt\right|}_{t = {t}_{l}}$. With the shorthand ${p}_{l}^{\pm } = r {\left({t}_{l}\pm iτ\right)}^{2}$, the expected variance of ${ϕ}_{l}^{′}$ is given by ${\left(Δ{ϕ}_{l}^{′}\right)}^{2} \approx \frac{1}{{\left(4τ\right)}^{2}} \left[{\left(\frac{Δ {p}_{l}^{+}}{{p}_{l}^{+}}\right)}^{2}+{\left(\frac{Δ {p}_{l}^{-}}{{p}_{l}^{-}}\right)}^{2}\right] ,$ (19) assuming the uncertainties $Δ {p}_{l}^{\pm }$ are sufficiently small [25]. Using the above implementation of the imaginary time evolution, it is possible to measure ${q}_{l}^{\pm } = {e}^{- 2 τ {\sum }_{j} \left|{λ}_{j}\right|} {p}_{l}^{\pm }$ by performing a projective measurement onto |*ψ*〉. Since the measurement outcomes follow a binomial distribution, the corresponding uncertainty satisfies ${\left(Δ{q}_{l}^{\pm }\right)}^{2} \leq {q}_{l}^{\pm } / {M}_{l}$, where ${M}_{l}^{\pm }$ denotes the respective number of measurements. It follows that ${\left(Δ{p}_{l}^{\pm }\right)}^{2} \leq {e}^{2 τ {\sum }_{j} \left|{λ}_{j}\right|} {p}_{l}^{\pm } / {M}_{l}^{\pm }$*.* The exponential prefactor can be ignored as *τ* = 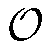 (1/*n*)*.* Hence, ${M}_{l}^{\pm } = O \left(1/\left({τ}^{2}{η}^{2}{p}_{l}^{\pm }\right)\right)$ samples are sufficient to ensure that the error $Δ {ϕ}_{l}^{′}$ due to shot noise is bounded from above by *η*.

As in section 2.2, we numerically integrate the phase gradient using a Newton-Cotes formula with *N*ₜᵢₘₑₛ = 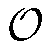 ((*nt*/*ε*)^{1/2}*^{s}t*), such that the integration error is less than *ε*. Accordingly, we choose $η = O \left(ϵ/{N}_{times}^{1 / 2}\right)$ to bound the accumulated statistical uncertainty by *ε*. In addition to the statistical uncertainty, the phase gradient incurs a systematic error due to the first-order Trotter decomposition of the imaginary time evolution and the finite-difference approximation of the derivative in Eq. (15). Assuming that the Loschmidt echo does not vanish, both errors can be shown to be of size 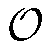 (*nτ*²) [19], which may accumulate during the numerical integration to 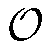 (*N*ₜᵢₘₑₛ*nτ*²). By choosing *τ* = 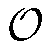 ((*ε*/*t*)^{(1+1/2*s*)/2}/*n*), we ensure that the this total error bounded by *ε* while satisfying the above requirement *τ =* 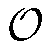 (1/*n*)*.* Combining these results yields the total number of samples ${M}_{tot} = {\sum }_{l = 1}^{{N}_{times}} \left({M}_{l}^{+}+{M}_{l}^{-}\right) = O \left(\frac{{N}_{times}^{2}}{{τ}^{2} {ϵ}^{2} {r}_{\pm , min}^{2}}\right) .$ (20) By plugging in the bound for *τ*, we finally obtain ${M}_{tot} = O \left({n}^{2 + 1 / s}{\left(t/ϵ\right)}^{3 + 3 / 2 s}{r}_{\pm , min}^{- 2}\right) .$ (21) As can be seen from the comparison in Table I, the ITE phase gradient compares favorably to the direct phase gradient in terms of the dependence on the magnitude of the Loschmidt echo, although the dependence on *t* and *ε* is slightly worse.

For product states, short ITE can be implemented without any auxiliary qubits, as proposed in [19]. We further remark that a particularly simple implementation is possible for initial computational basis states and Ising-type models, which can be split into a classical and a quantum part *H*_{Ryd} = *H_{c} + H_{q},* with ${H}_{q} ∝ {\sum }_{i} {σ}_{i}^{x}$. Then, the initial state is an eigenstate of *H_{c}*, and at a first-order Trotter decomposition, the ITE gate only yields a global prefactor exp(-*τζ_{c}*): ${e}^{- τH} \left|ψ\right〉 \approx {e}^{- {τH}_{c}} {e}^{- {τH}_{q}} \left|ψ\right〉 = {e}^{- {τζ}_{c}} {e}^{- {τH}_{q}} \left|ψ\right〉 .$ (22) This simplification applies, in particular, to the Rydberg Hamiltonian defined on a graph 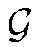 *=* (*V, ε*) with vertices *V* and edges *ε* as: ${H}_{Ryd} = {\sum }_{\left(i, j\right) ∈ E} \frac{{V}_{0} {n}_{i} {n}_{j}}{{\left|{r}_{i}-{r}_{j}\right|}^{6}} - Δ {\sum }_{i ∈ V} {n}_{i} + \frac{Ω}{2} {\sum }_{i ∈ V} {σ}^{x}$ (23) with *nᵢ* = |1〉*ᵢ*〈1|. The model can be natively implemented on neutral atom arrays, which have emerged in recent years as a powerful hardware platform for quantum computation allowing for both analog simulation and high-fidelity digital gates [29]. Realizing the ITE for the quantum part *H_{q}* is particularly straightforward in this case, as exp(-*τH_{q}*) can be implemented with local *σ^{y}*-rotations. Interestingly, in the strong-interaction limit of the so-called PXP model [39], short ITE can be realized for arbitrary product states with local *σ^{y}-*rotations, instead of only classical product states, see Appendix F for details.

Note that the simplifications how to obtain the phase gradient for Ising-type models and classical initial states similarly apply to the direct phase gradient method. There, one only needs to control the single-qubit *σ^{x}*-operators instead of multi-qubit gates.

### 3. NUMERICAL CASE STUDY

We include numerical simulations to showcase the sequential Hadamard test for a simple spin model on a noisy digital quantum device, demonstrating the feasibility of the method for initial entangled states. We consider the non-integrable, one-dimensional Ising model with both a longitudinal and a transverse field [Fig. 6(a)]: ${H}_{Ising} = J {\sum }_{i} {σ}_{i}^{z} {σ}_{i + 1}^{z} + {B}_{x} {\sum }_{i} {σ}_{i}^{x} + {B}_{z} {\sum }_{i} {σ}_{i}^{z} .$ (24)

We parametrize a family of Hamiltonians as *λ*, *H*(*λ*) *=* (1 - *λ*)*H*₀ + *λ*H₁, which interpolates between *H*₀ = *H*_{Ising}(*J* = 0, *Bₓ = 1, B_{z}* = 0) and *H*₁ = *H*_{Ising}(1.5, 1, 1). The spectrum of *H*(*λ*) is shown in Fig. 6(a), along with curves indicating the optimized energies using two probe states: a product state, and a depth-2 variational circuit. Details of the ansätze are included in Appendix E. Although the product state ansatz attains relatively low energies in this Ising model, in general, preparing an entangled initial state is crucial for accessing lower-energy states. As an example, our variational ansatz yields lower energies than the product state. We choose the Hamiltonian *H*(λ = 0.5) and simulate the sequential Hadamard test using both optimized initial states.

First, we consider a noiseless circuit with exact measurement results, using a second-order Suzuki-Trotter decomposition of Hamiltonian evolution *exp*(*-iHt*) with a Trotter step of 0.25. We show the amplitude *r*(*t*) and the reconstructed phase *ϕ*(*t*) of the complex Loschmidt echo for both initial states in Fig. 6(b-e). While the amplitude can be estimated without control, the phase information is obtained using the sequential Hadamard test, using local control in each iteration of the algorithm.

Taking a fixed number of samples [40], we show the sampling error - estimated from 50 independent datasets - as a shaded region around the estimated mean; a few hundred samples 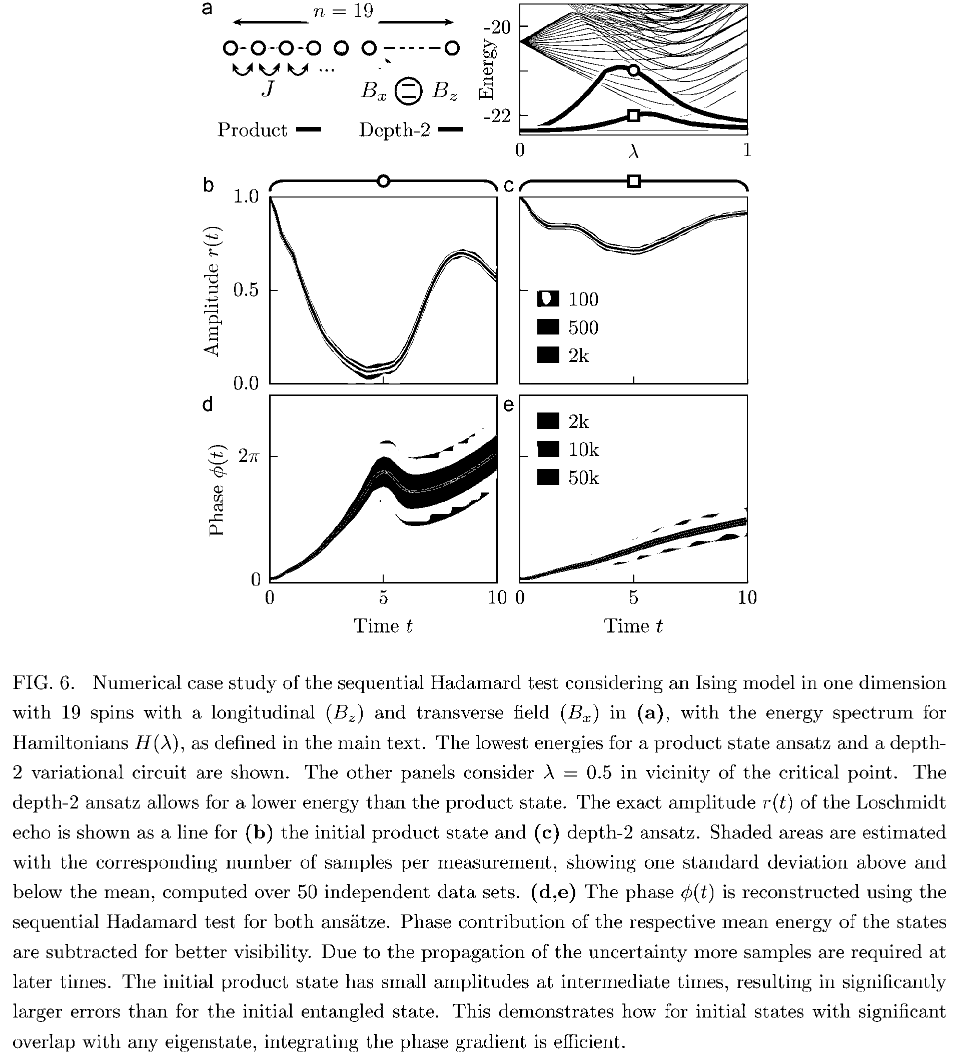 suffice for precise amplitude estimation. As errors accumulate over time, the uncertainty in the phase increases over time, overall requiring more samples for accurate estimation. The integration of the phase is sensitive to small amplitudes. This can be observed when the product state amplitude becomes small around *t* = 5, amplifying phase errors, such that an offset persists at later times. This highlights that initial states that have significant overlap with an eigenstate are particularly well suited for the sequential methods presented in this work.

We incorporate hardware errors by applying depolarizing noise after every multi-qubit gate at 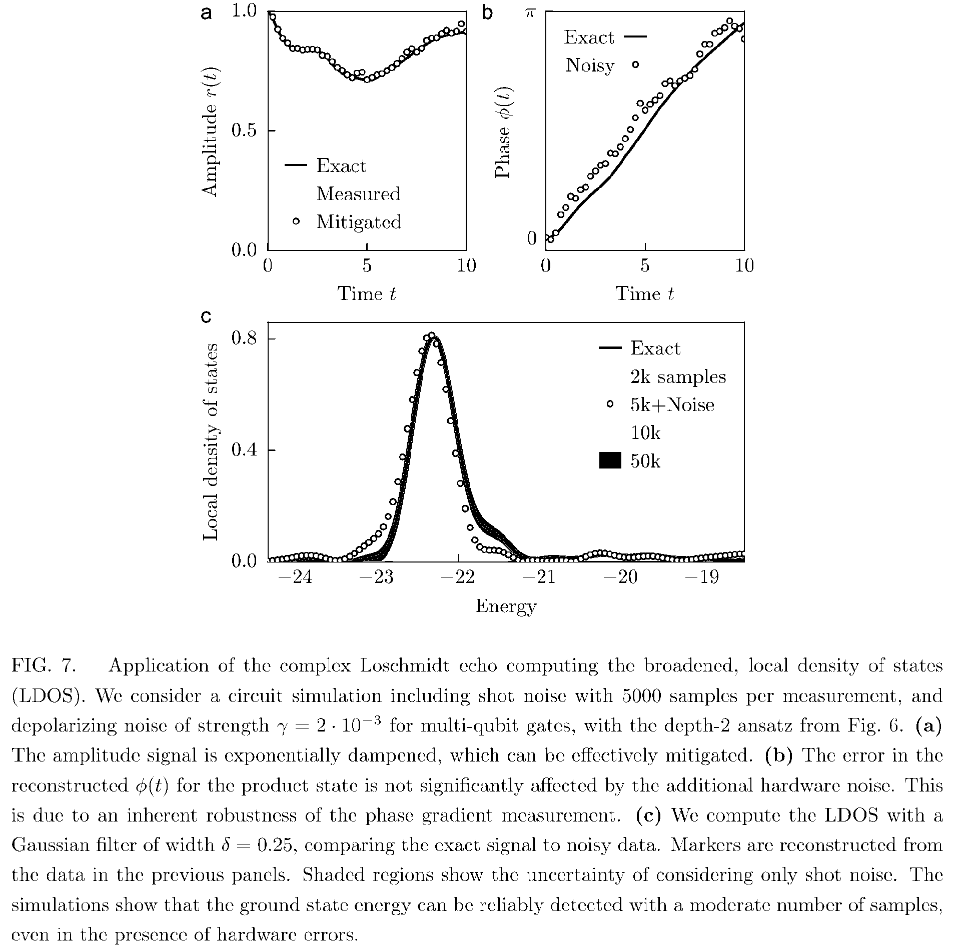 a strength of γ = 2 · 10⁻³, reflecting current device performance [41]. The Loschmidt echo is highly sensitive to hardware imperfections. In fact, the amplitude decays swiftly from the exact values, as the data in Fig. 7(a) illustrates. However, this sensitivity can be exploited for error mitigation, as noise generally steers the dynamics away from the target state, causing the amplitude *r* to decay exponentially on top of its noiseless value [19, 22]. We mitigate this decay by fitting the measured survival probability with exp(-2*t*Γ) to extract the decay rate Γ, effectively compensating for the loss in amplitude, see Appendix E for details.

Remarkably, we observe that the measurement of the phase gradient is more robust to noise than the amplitude of the Loschmidt echo. To see how this robustness enters, recall the formula for the phase gradient (Eq. 10). The phase gradient is a ratio of squared Loschmidt echoes. Both the numerator and the denominator are subject to an exponential decay of the respective signals. Together, these effects may cancel out, such that no bias to the phase gradient d*ϕ*(*t*)/d*t* is introduced. The variance of the estimation increases, though, when the numerator and denominator become very small. We observe the robustness of the phase gradient in the presence of noise in the numerical simulation in Fig. 7(b), as the phase information of the depth-2 ansatz state aligns very well with the exact phase.

As an application, we use the time series of the Loschmidt echo *g*(*t*) *= r*(*t*)*e*^{*iϕ*(*t*)} to compute the (broadened) local density of states (LDOS): $D \left(E\right) = \left〈ψ\right| {P}_{δ} \left(E\right) \left|ψ\right〉 \approx {\sum }_{m = - ∞}^{∞} {c}_{m} {e}^{{it}_{m} E} g \left(t\right) ,$ (25) using a (discretized) Gaussian energy filter *P_{δ}*(*E*) = exp[-(H - *E*)²/(2*δ*²)]. The definition of the coefficients *cₘ* and the discrete times *tₘ*, together with details of the implementation is included in Appendix E. The LDOS is considered using a filter width of *δ* = 0.25. The shot noise for the LDOS combines uncertainties from both the amplitude and the phase. For the total sample count for computing the phase information, the length of the gate sequence (here 720, cf. E) is multiplied with the number of samples for both basis measurements of the auxiliary qubit: we conclude that the full data shown with few thousand samples per measurement can be obtained on a current superconducting qubit chip within minutes [41]. Together, the local density of states (LDOS) derived from the noisy data is in good agreement with the exact results for the entangled initial state, accurately identifying the ground state energy [Fig. 7(c)].

We further remark that under the assumption that the noise can indeed be modeled as an exponential damping exp(-Γ*t*) with a damping factor Γ, and we do *not* mitigate the error, then the hardware errors lead to an effective broadening of the reconstructed local density states (LDOS). Consider a noisy time-series for the complex Loschmidt echo *g̃*(*t*) *= g*(*t*)exp(-Γ*t*). For the LDOS we have $\begin{matrix}D \left(E\right) = \left〈ψ\right| δ \left(H-E\right) \left|ψ\right〉 \approx {\int }_{- ∞}^{∞} dt {g}^{˜} \left(t\right) {e}^{iEt} \\ = {\int }_{- ∞}^{∞} dt g \left(t\right) {e}^{i \left(E-iΓ\right) t} ,\end{matrix}$ (26) with *δ*(*H - E*) a *δ*-function centered at an energy *E*. When considering a broadened LDOS with a Gaussian filter, the exponential damping of the Loschmidt echo amplitudes yields a convolution of Gaussians and Lorentzians, where the Lorentzians correspond to line-broadening due to the non-mitigated damping.

### 4. COMPARISON WITH OTHER METHODS

Although the complex Loschmidt echo is a powerful tool in quantum simulation and essential for extracting spectral properties, the number of efficient algorithmic techniques for its computation remains limited. In this section, we review a selection of key methods proposed in the literature for measuring complex Loschmidt echoes.

From a complexity theory perspective, quantum dynamics cannot be simulated classically in an arbitrary setting, unless BPP = BQP, which is widely believed not to be the case. Computing Loschmidt echoes of initial product states is #P-hard, when considering an arbitrary, constant time up to a multiplicative error which is at most polynomially large in the system size [42, 43]. Until a very short, constant time, however, cluster expansion methods provide an efficient classical method to compute the Loschmidt echo of initial product states [44]. For any local Hamiltonian with its spectrum contained in the energy interval [-*n*,*n*], there is a product state with energy -*κn*, with *κ* > 1/9 [14, 45]. Hence, we only have guarantees to classically compute very short Loschmidt echoes in the middle of the spectrum for local Hamiltonians.

The general textbook method to obtain the complex Loschmidt echo is the Hadamard test [cf. Fig. 1(2, left)]. The circuit allows to obtain the real part and imaginary part of the Loschmidt echoes separately. The global control of the dynamics can be realized by considering a Trotter decomposition and controlling every gate. Decomposing the controlled gates into a native gate set yields a significant overhead for the number of quantum gates. Additionally, the limited connectivity of most quantum devices requires an additional factor of 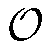 (*n*^{1+1/*d*}) SWAP operations, for a lattice of of *d* dimensions. Instead of a single auxiliary qubit, the Hadamard test can also be realized with a *n*-qubit GHZ state, which is then distributed among the lattice to reduce the number of SWAP gates. Different schemes exist to prepare a large GHZ state: sequentially in 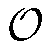 (*n*) depth, thereby allowing for error detection [46], parallelized in 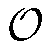 [log(*n*)] depth, or, using measurements in 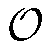 (1) depth [36].

One avenue to realize controlled dynamics is by carefully engineering a sequence of sign flips in the target Hamiltonian. This technique is closely related to decoupling techniques [47-49]. The main idea is that controlling Pauli operators are simple Clifford operators, while controlling quantum dynamics results in complicated gate decompositions. First, consider the special case where there exists a simple transformation *V* composed of local Pauli operators that allow to flip the sign of the Hamiltonian as *VUV* = *U*^{†}. Then, two time evolutions of time evolutions for time t/2, interleaved with two controlled transformations, prepare controlled dynamics *exp*(*-itH*)*.* In general, when this symmetry of the Hamiltonian is not present, controlled dynamics can be realized considering a decomposition into gates and then finding a sequence of Pauli operators that flip the global spin, as analyzed in detail in [48]. These techniques allow to optimize the implementation of controlled dynamics, but still require extensive swapping (or shuttling) of the auxiliary qubit, or a large GHZ state.

The challenges in realizing global control motivate the search for control free methods. One approach is the use of interferometry with a suitable reference state. Being interested in the complex Loschmidt echo for the state |*ψ*〉, measuring the absolute Loschmidt echo for the superposition $\left(\left|ψ\right〉+\left|ϕ\right〉\right) / \sqrt{2}$ with |*ϕ*〉 an eigenstate of of the Hamiltonian *H*|*ψ*〉 *=* λ|*ψ*〉 with known eigenenergy λ allows to obtain the phase of *r(t)* via the interference of the two states [14]. In general it will be challenging to prepare the superposition, however, notable exceptions exist, e.g. the vaccuum state of the Heisenberg model [14], or an impurity in a cold atomic system [50]. For quantum devices that implement qudits, there is the possibility to use the additional levels as shelving states. They effectively act as a reference state with trivial eigenenergy [14, 51]. This approach has been experimentally demonstrated in Quantinuum's trapped-ion quantum processor to reconstruct Loschmidt echoes for the Fermi-Hubbard Hamiltonian [52].

As an alternative to the preparation of an initial cat state, a sequence of reference states can be considered [19]. The procedure is as follows: Let |*ϕ*₀〉 be a state with known eigenenergy and we assume there is a sequence of local unitaries that connects from |*ϕ*₀〉 to |*ψ*〉 via intermediate states |*ϕ*₁〉, |*ϕ*₂〉, etc. Here, the cat states $\left(\left|{ϕ}_{i}\right〉+\left|{ϕ}_{j}\right〉\right) / \sqrt{2}$ are much easier to prepare because the states vary only locally. This procedure is generally well-suited for product states, as the method requires a unitary V that prepare the phase-controlled superposition of the sequence of states. For practical purposes one assumes *V* to be local, so a typical sequence length 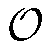 (*N*) is required to connect an arbitrary product state to a product state with a known Loschmidt echo. As we effectively integrate the change of the phase during the sequence of states, the amplitude of the intermediate Loschmidt echoes *rᵢⱼ =* |〈*ψᵢ*|*ψⱼ*(*t*)〉| cannot be too small, similar as in our methods. In principle, the sequential method could be extended to entangled states |*ψ*〉 = *U*|*ψ*₀〉. Then, |*ψ*₀〉 needs to be an eigenstate of the transposed Hamiltonian *U*^{†}*HU*, which generically is not the case.

A different avenue for control-free estimation of Loschmidt echoes was taken recently in [20], where the authors investigate the use of established classical phase reconstruction techniques for obtaining the phase of the complex Loschmidt echo. One classical method, vectorial phase-retrieval [53] uses absolute Loschmidt echoes of suitable interference signals as a time series. This is realized by creating superpositions of two states, under the assumption is that the states are spectrally independent. Spectral independence implies that they are not supported on the same eigenvalues of the Hamiltonian. The approach differs from reference states, which also relies on an interference measurement, by that the helper state is not required to be an eigenstate with known eigenvalue. However, realizing spectral independence can require a cat-state in general. While the approach is interesting, it currently lacks convergence guarantees and is therefore more of a heuristic nature.

### 5. DISCUSSION AND CONCLUSION

We have presented a toolbox of three methods that allow to measure the phase of the Loschmidt echo without the need for a global Hadamard test. Our methods leverage the relation between the Loschmidt echo at successive times. This strategy is particularly advantageous for spectroscopy applications that require a complete time series of the complex Loschmidt echo. By learning the time derivative of the phase, our methods significantly reduce the maximum circuit depth, this comes at the cost of an increased sampling overhead, which we have rigorously bounded.

As with all quantum phase estimation techniques, our approach requires an initial state with sufficient overlap with the eigenstates of interest - a condition that typically necessitates entanglement. Hence, a key strength of our methods is their applicability to arbitrary quantum states, rather than being limited to product states. This is particularly relevant, as for systems obeying the eigenstate thermalization hypothesis [54], the Loschmidt echo amplitude of generic product states decays exponentially in a time $O \left(1/\sqrt{n}\right)$. In contrast, states with a significant overlap with an eigenstate can maintain a robust Loschmidt echo amplitude, making phase integration more efficient. Moreover, even when the Loschmidt echo becomes vanishingly small at late times without reviving, these values do not significantly contribute to the Fourier transform and, hence, do not adversely affect the computed observables.

Our method is compatible with all reversible state preparation methods, in particular with a Trotterized quantum adiabatic algorithm [55], variational quantum algorithms [56], or with a circuit preparing the Hartree-Fock ansatz, a widely used choice for the initial state for quantum chemistry applications [57]. If the state preparation cannot be uncomputed, our methods can be adapted into a two-copy protocol where the state projection is realizing with a SWAP-test (cf. A).

Access to the complex Loschmidt echo opens up an avenue to compute observables at thermal equilibrium for any Hamiltonian, including those afflicted by the notorious sign problem in quantum Monte Carlo methods [14, 58]. This capability is relevant for a broad range of applications, including studies of topological phases [59] and strongly correlated models such as the Fermi-Hubbard model [60]. Overall, our work demonstrates that computing the complex Loschmidt echo for large quantum many-body systems without global control is a promising pathway for leveraging current quantum devices in quantum simulation tasks.

### Appendix A: Implementing the state projection

We comment on the realization of projecting onto the initial state, which is required for all three protocols presented in the main text. Quantum devices are generally initialized in an unentangled, computational basis state, e.g. |init〉 *=* |0〉⊗|0〉⊗···^{®}|0〉. After initialization, the probe state for quantum phase estimation |*ψ*〉 needs to be realized by a state-preparation method of choice, e.g. a variational quantum algorithm [56], or adiabatic state preparation [61, 62]. These action of these methods can then be described by a unitary transformation |*ψ*〉 = *U*|init〉. Hence, the projection onto the initial state |*ψ*〉 can be realized by the reverse transformation *U*^{†} before a computational basis measurement: $\left|ψ\right〉 \left〈ψ\right| = U \left|init\right〉 \left〈init\right| {U}^{†} .$ (A1) The computational basis projection is simply realized by taking snap shots in the computational basis and counting the occurrences of the all zero state |init〉.

For some scenarios, the state preparation cannot be reversed. One such case is non-unitary state preparation, using dissipation [63] or measurements [36]. Also, when using an analog simulator and performs a non purely adiabatic sweep, the operation *U*^{†} is not available. Then, a two-copy protocol can be used implementing a destructive SWAP test using Bell pair measurements on pairs of qubits [64]. Mathematically, this projection allows to compute Tr[*σρ*] with *σ* and *ρ* the density matrices of two quantum states.

### Appendix B: Details of the error analysis

In the derivation of the sample complexity for the three methods described in the main text, some details have been omitted for brevity of the presentation. We include them here.

### 1. Error of the sequential Hadamard test

We define the discrete Loschmidt echoes *gⱼ* are defined as ${g}_{L} : = \left〈ψ\right| \left({\prod }_{j = L}^{1} {u}_{j}\right) \left|ψ\right〉 .$ (B1) In each iteration of the protocol, we consider the circuit in Fig. 3. Combining the expectation values of the *σ^{x}*-measurement and the *σ^{y}*-measurement yields $\begin{matrix}\left〈{σ}^{x}\right〉 + i \left〈{σ}^{y}\right〉 = Rc \left[{g}_{L}{g}_{L - 1}^{∗}\right] + i Im \left[{g}_{L}{g}_{L - 1}^{∗}\right] \\ = {g}_{L} {g}_{L - 1}^{∗} .\end{matrix}$ (B2) To obtain *g_{L}* from the measured quantities we divide recursively as ${g}_{L} = \frac{{g}_{L} {g}_{L - 1}^{∗}}{{g}_{L - 1}^{∗} {g}_{L - 2}} ⋅ \frac{{g}_{L - 2} {g}_{L - 3}^{∗}}{{g}_{L - 3}^{∗} {g}_{L - 4}} … . . \frac{{g}_{2} {g}_{1}^{∗}}{{g}_{1}^{∗}} ,$ (B3) here assuming even *L.* When *L* is odd, the last term in Eq. (B3) is ${g}_{1}^{∗} / 1$. The recursive formula factors into a part for the amplitude *r_{L}* and a phase contribution exp(*iϕ_{L}*). It is illustrative to take the logarithm and consider phase contribution only. For the phase the formula in Eq. (B3) corresponds to $\begin{matrix}{ϕ}_{L} = \left({ϕ}_{L}-{ϕ}_{L - 1}\right) - \left({ϕ}_{L - 2}-{ϕ}_{L - 1}\right) \\ + \left({ϕ}_{L - 2}-{ϕ}_{L - 3}\right) - \left({ϕ}_{L - 4}-{ϕ}_{L - 3}\right) \\ + ⋯ + \left({ϕ}_{2}-{ϕ}_{1}\right) - \left(0-{ϕ}_{1}\right) .\end{matrix}$ (B4) In the absence of finite-sampling statistics the recursive approach would allow to faithfully reconstruct all Loschmidt amplitudes. However, in practice, it is much cheaper to measure the amplitudes separately and only recursively compute the phase information.

For the error analysis, we define the observables as *A_{α}* := *σ^{α}*⊗|*ψ*〉〈*ψ*|, with a ∈ {*x,y*}. The first and second moments of *A_{α}* are given as ${\left〈{A}_{x}\right〉}_{l} = \left〈{σ}^{x}⊗|ψ\right〉 {\left〈\left.ψ\right|\right〉}_{l} = Re \left[{g}_{l}{g}_{l - 1}^{∗}\right] ,$ (B5) ${\left〈{A}_{y}\right〉}_{l} = \left〈{σ}^{y}⊗|ψ\right〉 {\left〈\left.ψ\right|\right〉}_{l} = Im \left[{g}_{l}{g}_{l - 1}^{∗}\right] , and$ (B6) ${\left〈{A}_{α}^{2}\right〉}_{l} = \left〈I⊗|ψ\right〉 {\left〈\left.ψ\right|\right〉}_{l} = \left({r}_{l}^{2}+{r}_{l - 1}^{2}\right) / 2 .$ (B7) The squared error ${\left(Δ\left[{g}_{l}{g}_{l - 1}^{∗}\right]\right)}^{2}$ is the sum of the variance of *Aₓ* and *A_{y}*: $\begin{matrix}Δ {\left[{g}_{l}{g}_{l - 1}^{∗}\right]}^{2} & = \left〈{A}_{x}^{2}\right〉 + \left〈{A}_{y}^{2}\right〉 - {\left〈{A}_{x}\right〉}^{2} - {\left〈{A}_{y}\right〉}^{2} & \left(B8\right) \\ & = {r}_{l}^{2} + {r}_{l - 1}^{2} - {r}_{l}^{2} {r}_{l - 1}^{2} . & \left(B9\right)\end{matrix}$ For the multiplicative error this yields $\begin{matrix}\frac{{\left(Δ\left[{g}_{l}{g}_{l - 1}^{∗}\right]\right)}^{2}}{{\left({r}_{l}{r}_{l - 1}\right)}^{2}} & = \frac{{r}_{l}^{2} + {r}_{l - 1}^{2} - {r}_{l}^{2} {r}_{l - 1}^{2}}{{r}_{l} {r}_{l - 1}^{2}} & \left(B10\right) \\ & = \frac{1}{{M}_{l}} \left(\frac{1}{{r}_{l}^{2}}+\frac{1}{{r}_{l - 1}^{2}}-1\right) & \left(B11\right) \\ & \leq \frac{1}{{M}_{l}} \left(\frac{1}{{r}_{l}^{2}}+\frac{1}{{r}_{l - 1}^{2}}\right) . & \left(B12\right)\end{matrix}$ For the rest of the derivation we refer to the main text.

### 2. Error of the direct phase gradient method

The output of the quantum circuit in Fig. 4 yields the quantity ${a}_{j , l} : = \frac{1}{2} \left〈ψ\right| exp \left({it}_{l}H\right) \left\{{P}_{j},\left|ψ\right〉\left〈ψ\right|\right\} exp \left(-{it}_{l}H\right) \left|ψ\right〉 ,$ (B13) where *tₗ* is a specific time corresponding to a phase gradient with index *l.* The Hamiltonian given as *H =* Σ*jλⱼPⱼ*, with *λⱼ* a scalar and *Pⱼ* a Pauli string. For the error analysis we write the probability ${p}_{l} : = {r}_{l}^{2} = {\left|\left〈ψ\right|exp\left(-{iHt}_{l}\right)\left|ψ\right〉\right|}^{2}$ for a successful projection onto the initial state. The phase gradient is then given as ${ϕ}_{l}^{′} : = {\left.\frac{d ϕ \left(t\right)}{d t}\right|}_{t = {t}_{l}} = - \frac{{\sum }_{j} {λ}_{j} {a}_{j , l}}{{p}_{l}}$ (B14) and error in the phase gradient is: $\begin{matrix}\left(Δ{ϕ}_{l}^{′}\right) ≃ {\left({ϕ}_{l}^{′}\right)}^{2} \left[{\left(\frac{{λ}_{j} Δ \left({\sum }_{j} {a}_{j , l}\right)}{{\sum }_{j} {a}_{j , l}}\right)}^{2}+{\left(\frac{Δ {p}_{l}}{{p}_{l}}\right)}^{2}\right] \\ = \frac{{\left({\sum }_{j} {a}_{j , l}\right)}^{2}}{{p}_{l}^{2}} \left[\frac{{\left({\sum }_{j} {λ}_{j} Δ {a}_{j , l}\right)}^{2}}{{\left({\sum }_{j} {a}_{j , l}\right)}^{2}}+\frac{{\left(Δ{p}_{l}\right)}^{2}}{{p}_{l}^{2}}\right] \\ = \frac{{\left({\sum }_{j} {λ}_{j} Δ {a}_{j , l}\right)}^{2}}{{p}_{l}^{2}} + {\left({ϕ}_{l}^{′}\right)}^{2} \frac{{\left(Δ{p}_{l}\right)}^{2}}{{p}_{l}^{2}} ,\end{matrix}$ (B15) assuming Δ(Σ*ⱼaⱼ*) *≪* Σ*ⱼaⱼ* and Δ*p ≪ p.*

To compute the error term (Σ*ᵢ*Δ*a_{j,l}*)², we consider the first two moments of the observable *A*ₓ: ${\left〈{A}_{x}\right〉}_{j , l}^{2} = {\left〈{σ}^{x}⊗\left|ψ\right〉\left〈ψ\right|\right〉}_{j , l}^{2} = {a}_{j , l}^{2} ,$ (B16) $\begin{matrix}{\left〈{A}_{x}^{2}\right〉}_{j} & = {\left〈I⊗\left|ψ\right〉\left〈ψ\right|\right〉}_{j , l} \\ & = {p}_{l} + {\left|\left〈ψ\right|{P}_{j}exp\left(-{it}_{l}H\right)\left|ψ\right〉\right|}^{2} .\end{matrix}$ (B17) Then, with *M_{a,l}* the number of measurements for the evaluation of each *a_{j,l}*, $\begin{matrix}{\left(Δ{a}_{j , l}\right)}^{2} & = \frac{{\left〈{A}_{x}^{2}\right〉}_{j , l} - {\left〈{A}_{x}\right〉}_{j , l}^{2}}{{M}_{a , l}} \\ & = \frac{{p}_{l} + {\left|\left〈ψ\right|{P}_{j} exp\left(-{iHt}_{l}\right)\left|ψ\right〉\right|}^{2} - {a}_{j , l}^{2}}{{M}_{a , l}} .\end{matrix}$ (B18) For the rest of the derivation we again refer to the main text.

### Appendix C: Optimized sequential Hadamard via circuit cutting

We include a discussion of the optimized sequence for the sequential Hadamard method. In the main text, we mention that there is a freedom how to choose the sequence of gates in the sequential Hadamard test to compute the Loschmidt echo. An optimized sequence allows to reduce the total number of samples and can also reduce the circuit depth. The key observation is that in the sequential control technique, starting from the full circuit with a single controlled gate, we effectively remove the controlled gate from the circuit for the next iteration and control another gate. This process is repeated until there are no gates left in the circuit.

Let us consider a brick-wall circuit in one dimension that approximates Hamiltonian dynamics of a geometric 2-local interacting Hamiltonian *H* = *H*_{odd} + *H*ₑᵥₑₙ. For concreteness, we assume an even number of qubits *n,* the Hamiltonian terms in ${H}_{odd} = {\sum }_{j odd}^{n - 1} {h}_{j , j + 1}$ act on the sites (1, 2), (3, 4), etc., while those in ${H}_{even} = {\sum }_{j even}^{n - 2} {h}_{j , j + 1}$ act on (2, 3), (4, 5), etc. The circuit is thus composed of alternating layers implementing the gates corresponding to *H_{A}* and *H_{B}*, respectively. When a gate is removed from the circuit, we can usually merge two gates from the adjacent and subsequent layers, by multiplying the two unitaries. This reduces the total number of gates and typically also lowers the count of entangling gates when the gates are decomposed into a native gate set. Let the depth of the circuit be *D*, then we could first remove all gates from every second layer, one gate per iteraction, until eventually all those layers are removed from the circuit that correspond to the Hamiltonian dynamics of *H_{A}.* Then, only gates the implementing *H_{B}* remain in the circuit and they can be fully merged into a single layer of gates. While the original circuit contained *N*_{gates} ≈ *ND*/2 gates, the optimized sequence leaves us with merging gates reduces them to *N*_{gates} ≈ *ND*/4 gates.

We note that if we seek to to compute the time series of the Loschmidt echo, e.g. for spectroscopy applications, then only those gate mergers should be considered, such that the intermediate circuits correspond to proper times. Concretely, consider a one-dimensional brick wall circuit and a 2nd-order Trotter formula approximating the dynamics of the Hamiltonian *H = H_{A} + H_{B}.* As an example consider the circuit ${e}^{- itH} \approx {U}_{A}^{1 / 2} {U}_{B} {U}_{A} {U}_{B} {U}_{A} {U}_{B} {U}_{A}^{1 / 2} ,$ (C1) where *U_{A}* = exp(-*itH_{A}*), and *U_{B} =* exp(-*itH_{B}*). Each of these layers is composed of local two-qubit gates in our case. A simple strategy that keeps proper times will still reducing the gate count, is by starting from the full circuit at the largest time t, then effectively removing a first Trotter layer in the middle of the circuit. This leaves us with ${U}_{A}^{1 / 2} {U}_{B} {U}_{A}^{2} {U}_{B} {U}_{A}^{1 / 2} ,$ (C2) thereby merging gates from the previous and subsequent layer, wherever possible. Next, the adjacent Trotter layer is removed, we are left with the circuit that realizes the dynamics for one earlier time step: ${U}_{A}^{1 / 2} {U}_{B} {U}_{A} {U}_{B} {U}_{A}^{1 / 2} .$ (C3) This is the approach we use for the numerical case study of the Ising model in Sec. 3.

Above, we described how to effectively cut the circuit along the space direction. Another approach is to perform cuts along the time direction. This can yield significant savings in the sample cost, if the initial state is a product states or prepared by a shallow circuits, as detailed below in App. 1.

### Appendix D: Additional remarks for initial product states

When the initial state |*ψ*〉 is a product state, substantial simplifications of our protocol are possible. For some methods, the simplifications also apply for special classes of weakly entangled states.

### 1. Sequential Hadamard test

The sequential Hadamard method allows to optimize the order of the controlled gates, which we exploit here to reduce the sample complexity when the initial state is a product state. If we remove all gates of the circuit that entangle two subsystems, we can effectively cut the circuit in half, by cutting along the time dimension. Repeatedly cutting the remaining system, we are eventually left with computing the Loschmidt echo of a few-qubit system, which can be done on a classical computer.

By assuming *translational invariance,* the remaining subsystems are identical, allowing to save significant resources. For one-dimensional systems the length of the cut, i.e. the number of gates that we need to remove to perform a single cut, is 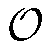 (*D*) for a circuit depth *D.* Hence, it is independent of the system size. Using bi-sections, the number of cuts that are required until the remaining circuit can be classically simulated is a logarithmic function of the system size. Hence, in one dimension, we have 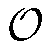 (*D*log[*n*]) many circuits that we need to execute to compute the Loschmidt echo up to time *t*.

In more than one dimensions, the length of the cut generally depends on the system size. For a translationally-invariant Hamiltonian on a d-dimensional regular lattice, with a side length of *n*^{1/*d*}, a hyperplane cut has a boundary 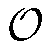 (*n*^{(*d-*1)*ld*})*.* The number of circuits in the sequential Hadamard test is therefore 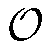 (*tn*^{(*d*-1)/*d*}), Then, the total sample complexity is ${M}_{tot , product} = {O}^{˜} \left({\left({n}^{\left(d-1\right) / d}D/ϵ\right)}^{2}{r}_{min}^{- 2}\right) ,$ (D1) where the 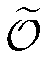 notation includes the logarithmic dependence on the system size.

We highlight that this technique can also be applied if the initial state is prepared by a shallow circuit V, such that *V*|init〉 *=* |*ψ*〉. Instead of 〈*ψ*|*U*|*ψ*〉, one simply also computes the Loschmidt echo for the transformed unitary 〈init|*V*^{†}*UV*|init〉, slightly increasing the length of each cut.

### 2. Direct phase gradient method

We explain in the main text that, when the initial state is a product state, the direct phase gradient method can be used without auxiliary qubits. As an alternative to preparing both states $\left|{φ}_{j}^{\pm }\right〉 = \left(\left|ψ\right〉\pm {P}_{j}\left|ψ\right〉\right) / \sqrt{2}$, only one of them can be used. We can see how the controlization of the gate can be avoided by considering the superposition $\left|{φ}_{j}^{+}\right〉 = \frac{1}{\sqrt{2}} \left(\left|ψ\right〉+{h}_{j}\left|ψ\right〉\right) .$ (D2) This state can be easily prepared by a local gate. Note that we can directly consider *hⱼ*, instead of *Pⱼ*. We then measure the probability $\begin{matrix}{\left|\left〈{φ}_{j}|ψ\left({t}_{l}\right)\right〉\right|}^{2} = \frac{1}{2} {\left|\left〈ψ|ψ\left({t}_{l}\right)\right〉\right|}^{2} + \frac{1}{2} {\left|\left〈ψ\right|{h}_{j}\left|ψ\left(t\right)\right〉\right|}^{2} \\ + \frac{1}{2} \left〈ψ\left({t}_{l}\right)\right| \left\{{h}_{j}, \left|ψ\right〉\left〈ψ\right|\right\} \left|ψ\left({t}_{l}\right)\right〉 ,\end{matrix}$ (D3) writing |*ψ*(*tₗ*)〉 = exp(*-iHtₗ*)|*ψ*〉*.* Hence, this approach also allows to evaluate the phase gradient ${\left.\frac{d ϕ \left(t\right)}{d t}\right|}_{t = {t}_{l}} = \frac{1}{2 {r}_{l}^{2}} {\sum }_{j} \left(2{\left|\left〈{φ}_{j}|ψ\left({t}_{l}\right)\right〉\right|}^{2}-{\left|\left〈ψ\right|{h}_{j}\left|ψ\left({t}_{l}\right)\right〉\right|}^{2}\right) - \frac{1}{2}$ (D4) by only measuring the survival probabilities without controlled operations.

### 3. ITE phase gradient method

For product states, the ITE phase gradient method as proposed in [19] can be used. For the sample complexity to obtain the Loschmidt echo *g*(*t*) within additive error *ε* we obtain ${M}_{tot , product} = O \left({n}^{1 + 1 / s}{\left(t/ϵ\right)}^{3 + 3 / 2 s}{r}_{\pm , min}^{- 2}\right) ,$ (D5) with *s* the integer depending on the order of the numerical integration formula (*s* = 1 for the trapezoidal rule, *s* = 2 for Simpson's rule) [32]. This result differs slightly from Ref. [19]: besides include the integration error, we obtain a lower sample complexity in the time *t*, because we use that the statistical noise is uncorrelated.

### Appendix E: Details on the numerical simulation

We provide additional information on the numerical case study shown in Fig. 6 and Fig. 7. The one-dimensional Ising Hamiltonian is decomposed into odd and even terms *H*_{Ising} = *H*_{odd} + *H*ₑᵥₑₙ using a 2nd-order Trotter-Suzuki decomposition [26]. When considering hardware noise, we assume multi-qubit depolarizing noise of strength γ = 2 · 10⁻³ on multi-qubit gates, i.e. on all circuit gates implementing the Ising model and an the controlled gate, which is a three qubit operation. Single qubit operations, namely the product state preparation and unpreparation, and the basis transformations on the auxiliary qubit, are therefore not subject to noise, as current hardware can implement them with an order higher fidelity than entangling gates (cf. [41]). The simulation is implemented using Cirq [65, 66].

The sequence of gates that we consider is the one described above in Sec. C. Whenever possible, we merge consecutive two-qubit gates.

We include the data for error mitigation in the numerical benchmarks of the Ising model. As described in [19, 22], we evolve forward and backward in time, such that a noiseless circuit returns the initial state with perfect fidelity. Then, hardware imperfections introduce deviations from this trajectory, resulting in an exponential decay if the survival probability. The decay can be seen in Fig. E, where we fit $r \left(t\right) = A cxp \left(-Γt\right)$ (E1) for both the product state and the depth-2 ansatz. Note that the the depth-2 ansatz has *Aᵥ* ≠ 1, as the state preparation is subject to noise. We observe very good agreement with an exponential slope.

As variational ansätze we consider a product state and a depth-2 ansatz. The product state has two parameters, one for the odd and one for the even sites, as $\left|p\left({θ}_{o}, {θ}_{c}\right.\right〉 = \left|ϕ\left({θ}_{o}\right)\right〉 ⊗ \left|ϕ\left({θ}_{c}\right)\right〉 ⊗ ⋯ ⊗ \left|ϕ\left({θ}_{o}\right)\right〉 .$ (E2) with $\left|ϕ\left(θ\right)\right〉 = cxp \left(-{iσ}^{y}θ/2\right) = cos \left(θ/2\right) \left|0\right〉 + \left(θ/2\right) \left|1\right〉 .$ (E3)

For the depth-2 ansatz, we combine a layer single-qubit rotations ${U}_{1} \left({θ}_{o}, {θ}_{c}\right) = cxp \left(-{iσ}^{y}{θ}_{o}/2\right) ⊗ cxp \left(-{iσ}^{y}{θ}_{c}/2\right) ⊗ …$ (E4) with an entangling layer, that is a time-dependent evolution with the classical part of the Ising Hamiltonian: ${U}_{2} \left(β\right) = exp \left[-{βH}_{Ising}\left(1.5, 0, 1\right)\right] .$ (E5) The depth-2 ansatz consists of alternating three *U*₁ and two *U*₂ layers, with eight parameters in total. We include the optimized parameters in Fig. E.

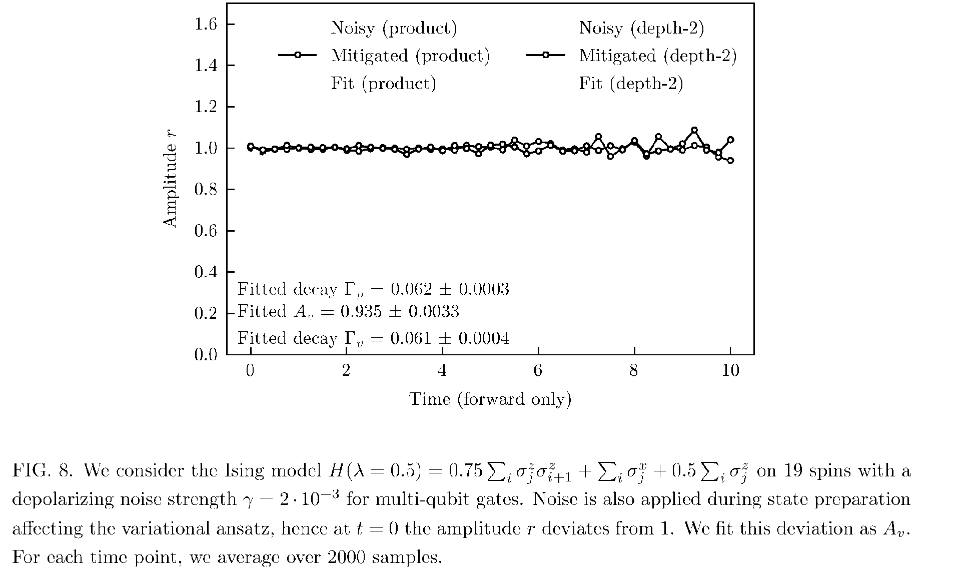

For the implentation of the discrete Gaussian filter, we have $D \left(E\right) = \left〈ψ\right| {P}_{δ} \left(E\right) \left|ψ\right〉 \approx {\sum }_{m = - ∞}^{∞} {c}_{m} {e}^{{it}_{m} E} g \left(t\right) ,$ (E6) with ${c}_{m} = \frac{Tδ}{\sqrt{2 π}} exp \left(-{t}_{m}^{2}{δ}^{2}/2\right) , {t}_{m} = m {t}_{max} / R$ and R the number of steps.

### Appendix F: ITE in the PXP model

The PXP model is obtained in the strong-interaction limit of the Rydberg Hamiltonian [39], neglecting contributions from the long-range interaction tails. We rewrite the local blockade constraint into a global constraint as $\begin{matrix}H = \frac{Ω}{2} {Σ}_{i} {P}_{i - 1} {σ}_{j}^{x} {P}_{i + 1} - Δ {Σ}_{i} {n}_{i} \left(F1\right) \\ = P \left({Σ}_{i}\frac{Ω}{2}{σ}_{x}^{2}-Δ{Σ}_{i}{n}_{i}\right) P \left(F2\right) \\ = P \left({Σ}_{i}{h}_{i}\right) P . \left(F3\right)\end{matrix}$ For the PXP model, any initial state in the subspace can be used for implementing ITE with single site rotations, as we show here.

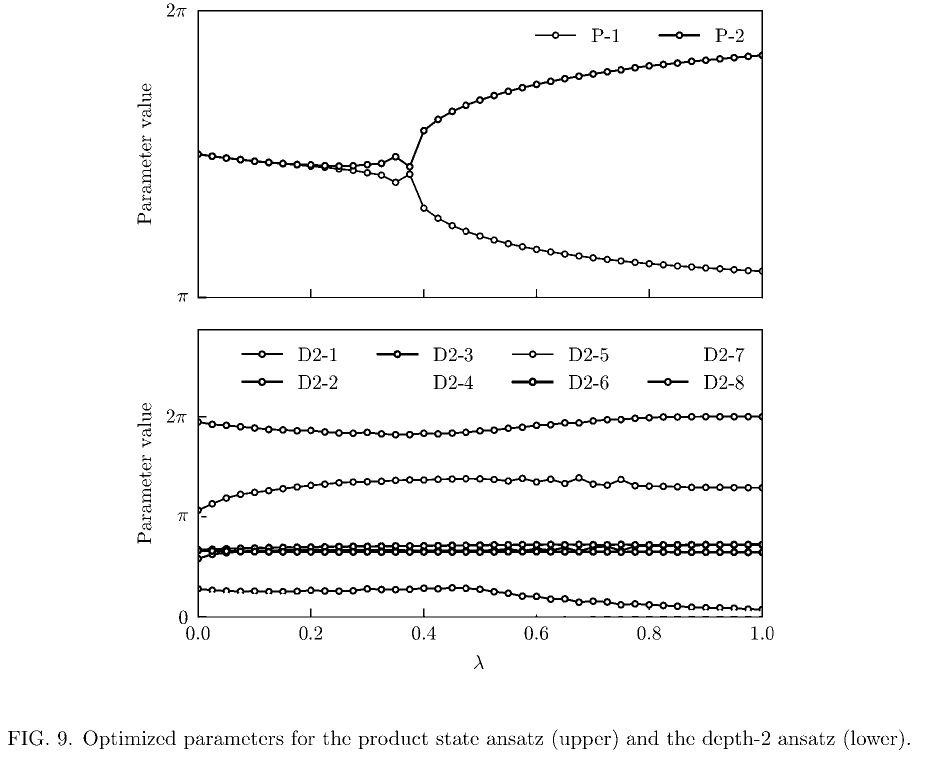

The initial state ansatz we consider is parametrized by an angle *α*. For each spin on sublattice A, the initial spin is $\left|ϕ\left(α\right)\right〉 = cos \left(α/2\right) \left|0\right〉 + sin \left(α/2\right) \left|r\right〉$ (F4) and the full initial state is $\left|ψ\left(α\right)\right〉 = \left|ϕ\left(α\right)\right〉 ⊗ \left|0\right〉 ⊗ \left|ϕ\left(α\right)\right〉 ⊗ ⋯ ⊗ \left|ϕ\left(α\right)\right〉 .$ (F5) The Hamiltonian on a single spin reads $\begin{matrix}h = \left(\begin{matrix}0 & Ω / 2 \\ Ω / 2 & - Δ\end{matrix}\right) = \frac{Ω}{2} {σ}^{x} - Δ n \left(F6\right) \\ = {Ω}_{eff} \left[sin\left(θ\right){σ}^{x}-2 cos\left(θ\right)n\right] \left(F7\right)\end{matrix}$ with the effective Rabi frequency ${Ω}_{eff} = \sqrt{{Δ}^{2} + {Ω}^{2}} / 2$ and tan(*θ*) = Ω/Δ, i.e. Ω_{eff}sin(*θ*) = Ω/2 and Ω_{eff}cos(*θ*) = Δ/2.

Then we compute that a Pauli-Y rotation is sufficient to realize short ITE under this model. $\begin{matrix}\left(h-\left〈h\right〉\right) \left|ϕ\left(α\right)\right〉 \left(F8\right) \\ = \left(\begin{matrix}- \frac{Ω}{2} sin \left(α/2\right) cos \left(α\right) + \frac{Δ}{2} sin \left(α/2\right) sin \left.\left(α\right)\right\} \\ \frac{Ω}{2} cos \left(α/2\right) cos \left(α\right) - \frac{Δ}{2} cos \left(α/2\right) sin \left(α\right)\end{matrix}\right) \\ = \frac{1}{2} \left[-Ωcos\left(α\right)+Δsin\left(α\right)\right] \left(\begin{matrix}sin \left(α/2\right) \\ - cos \left(α/2\right)\end{matrix}\right) \\ = {Ω}_{eff} sin \left(α-θ\right) \left(\begin{matrix}0 & 1 \\ - 1 & 0\end{matrix}\right) \left|ϕ\left(α\right)\right〉 \\ = {iaσ}^{y} \left|ϕ\left(α\right)\right〉 \left(F9\right)\end{matrix}$ where we define *α*(*α*, *θ*) := Ω_{eff}sin(*α* - *θ*).

Hence, in the PXP-model, imaginary time evolution for initial classical states can be implemented with local *σ_{y}*-rotations.
[1] R. P. Feynman, Simulating physics with computers, International Journal of Theoretical Physics 21, 467 (1982).
[2] S. Lloyd, Universal Quantum Simulators, Science 273. 1073 (1996).
[3] J. I. Cirac and P. Zoller, Goals and opportunities in quantum simulation, Nature Physics 8. 264 (2012).
[4] I. Georgescu, S. Ashhab, and F. Nori, Quantum simulation, Reviews of Modern Physics 86. 153 (2014).
[5] C. Gross and I. Bloch, Quantum simulations with ultracold atoms in optical lattices, Science 357. 995 (2017).
[6] E. Altman, K. R. Brown, G. Carleo, L. D. Carr, E. Demler, C. Chin, B. DeMarco, S. E. Economou, M. A. Eriksson, K.-M. C. Fu, M. Greiner, K. R. Hazzard, R. G. Hulet, A. J. Kollár, B. L. Lev, et al., Quantum Simulators: Architectures and Opportunities, PRX Quantum 2. 017003 (2021).
[7] A. J. Daley, I. Bloch, C. Kokail, S. Flannigan, N. Pearson, M. Troyer, and P. Zoller, Practical quantum advantage in quantum simulation, Nature 607. 667 (2022).
[8] Y. Cao, J. Romero, J. P. Olson, M. Degroote, P. D. Johnson, M. Kieferová, I. D. Kivlichan, T. Menke, B. Peropadre, N. P. D. Sawaya, S. Sim, L. Veis, and A. Aspuru-Guzik, Quantum Chemistry in the Age of Quantum Computing, Chemical Reviews 119. 10856 (2019).
[9] S. McArdle, S. Endo, A. Aspuru-Guzik, S. C. Benjamin, and X. Yuan, Quantum computational chemistry, Reviews of Modern Physics 92. 015003 (2020).
[10] A. Y. Kitaev, Quantum measurements and the Abelian Stabilizer Problem, arXiv:quant-ph/9511026 (1995).
[11] M. A. Nielsen and I. L. Chuang, Quantum Computation and Quantum Information (10th Anniversary edition) (Cambridge University Press, 2016).
[12] T. E. O'Brien, B. Tarasinski, and B. M. Terhal, Quantum phase estimation of multiple eigenvalues for small-scale (noisy) experiments, New Journal of Physics 21. 023022 (2019).
[13] R. D. Somma, Quantum eigenvalue estimation via time series analysis, New Journal of Physics 21, 123025 (2019).
[14] S. Lu, M. C. Bañuls, and J. I. Cirac, Algorithms for Quantum Simulation at Finite Energies, PRX Quantum 2. 020321 (2021).
[15] L. Lin and Y. Tong, Heisenberg-Limited Ground-State Energy Estimation for Early Fault-Tolerant Quantum Computers, PRX Quantum 3. 010318 (2022).
[16] K. Wan, M. Berta, and E. T. Campbell, Randomized Quantum Algorithm for Statistical Phase Estimation, Physical Review Letters 129. 030503 (2022).
[17] A. Dutkicwicz, B. M. Terhal, and T. E. O'Brien, Heisenberg-limited quantum phase estimation of multiple eigenvalues with few control qubits, Quantum 6. 830 (2022).
[18] N. S. Blunt, L. Caune, R. Izsák, E. T. Campbell, and N. Holzmann, Statistical Phase Estimation and Error Mitigation on a Superconducting Quantum Processor, PRX Quantum 4, 040341 (2023).
[19] Y. Yang, A. Christianen, M. C. Bañuls, D. S. Wild, and J. I. Cirac, Phase-Sensitive Quantum Measurement without Controlled Operations, Physical Review Letters 132, 10.1103/phvsrevlett.132.220601 (2024).
[20] L. Clinton, T. S. Cubitt, R. Garcia-Patron, A. Montanaro, S. Stanisic, and M. Stroeks, Quantum Phase Estimation without Controlled Unitaries (2024).
[21] The intermediate time points do not need to be identical between the methods. Due to the Trotterization in the first method, and the numerical phase integration in the others, the error scaling depends on the temporal resolution.
[22] Y. Yang, A. Christianen, S. Coll-Vinent, V. Smelyanskiy, M. C. Bañuls, T. E. O'Brien, D. S. Wild, and J. I. Cirac, Simulating Prethermalization Using Near-Term Quantum Computers, PRX Quantum 4. 030320 (2023).
[23] Y. Kim, A. Eddins, S. Anand, K. X. Wei, E. van den Berg, S. Rosenblatt, H. Nayfeh, Y. Wu, M. Zaletel, K. Temme, and A. Kandala, Evidence for the utility of quantum computing before fault tolerance, Nature 618. 500 (2023).
[24] The expectation value 〈*σ^{x}* + *iσ^{y}*〉 can also be evaluated directly using two controlled operations.
[25] J. R. Taylor, An Introduction to Error Analysis (University Science Books, Sausalito, California, 1997).
[26] N. Hatano and M. Suzuki, Finding exponential product formulas of higher orders, in Quantum annealing and other optimization methods (Springer, 2005) pp. 37 68.
[27] A. M. Childs, Y. Su, M. C. Tran, N. Wiebe, and S. Zhu, Theory of Trotter Error with Commutator Scaling, Physical Review X 11. 011020 (2021).
[28] E. Campbell, A random compiler for fast Hamiltonian simulation, Phys. Rev. Lett. 123, 070503 (2019) 123, 10.1103/physrevlett.123.070503 (2018).
[29] D. Bluvstein, H. Levine, G. Semeghini, T. T. Wang, S. Ebadi, M. Kalinowski, A. Keesling, N. Maskara, H. Pichler, M. Greiner, V. Vuletić, and M. D. Lukin, A quantum processor based on coherent transport of entangled atom arrays, Nature **604.** 451 (2022).
[30] T. I. Andersen, N. Astrakhantsev, A. H. Karamlou, J. Berndtsson, J. Motruk, A. Szasz, J. A. Gross, A. Schuckert, T. Westerhout, Y. Zhang, E. Forati, D. Rossi, B. Kobrin, A. D. Paolo, A. R. Klots, et al., Thermalization and Criticality on an Analog-Digital Quantum Simulator (2024).
[31] In practice, other numerical integration methods with uneven spacing, such as those based on Gaussian quadrature rules, could yield better integration results, but bounding the integration error is more challenging.
[32] A. Quarteroni, R. Sacco, and F. Saleri, Numerical Mathematics, Texts in Applied Mathematics, Vol. 37 (Springer, New York, NY, 2007).
[33] A. Gilyén, Y. Su, G. H. Low, and N. Wiebe, Quantum singular value transformation and beyond: exponential improvements for quantum matrix arithmetics, in Proceedings of the 51st Annual ACM SIGACT Symposium on Theory of Computing (2019) pp. 193 204.
[34] P. Rall, Quantum Algorithms for Estimating Physical Quantities using Block-Encodings, Physical Review A 102. 022408 (2020).
[35] C. Schön, E. Solano, F. Verstracte, J. I. Cirac, and M. M. Wolf, Sequential Generation of Entangled Multiqubit States, Physical Review Letters 95, 110503 (2005).
[36] L. Piroli, G. Styliaris, and J. I. Cirac, Approximating Many-Body Quantum States with Quantum Circuits and Measurements, Physical Review Letters 133, 230401 (2024).
[37] K. C. Smith, A. Khan, B. K. Clark, S. Girvin, and T.-C. Wei, Constant-Depth Preparation of Matrix Product States with Adaptive Quantum Circuits, PRX Quantum 5, 030344 (2024).
[38] A. M. Childs and N. Wicbe, Hamiltonian Simulation Using Linear Combinations of Unitary Operations, Quantum Information and Computation 12, 10.26421/QIC12.11-12.
[39] I. Lesanovsky and H. Katsura, Interacting Fibonacci anyons in a Rydberg gas, Physical Review A 86. 041601 (2012).
[40] An adaptive strategy that optimizes the number of samples in each measurement will allow to reduce the total sample count; we leave this for future work.
[41] R. Acharya, D. A. Abanin, L. Aghababaie-Beni, I. Aleiner, T. I. Andersen, M. Ansmann, F. Arute, K. Arya, A. Asfaw, N. Astrakhantsev, J. Atalaya, R. Babbush, D. Bacon, B. Ballard, et al., Quantum error correction below the surface code threshold, Nature . 1 (2024).
[42] A. Galanis, L. A. Goldberg, and A. Herrera-Poyatos, The complexity of approximating the complex-valued Ising model on bounded degree graphs 10.48550/ARXIV.2105.00287 (2021).
[43] A. Galanis, L. A. Goldberg, and A. Herrera-Poyatos, The complexity of approximating the complex-valued Potts model, computational complexity 31, 10.1007/s00037-021-00218-x (2022).
[44] D. S. Wild and A. M. Alhambra, Classical simulation of short-time quantum dynamics, PRX Quantum 4 (2), 020340 (2023) 4, 10.1103/prxquantum.4.020340 (2022).
[45] E. H. Lieb, The classical limit of quantum spin systems, Communications in Mathematical Physics 31, 327 (1973).
[46] D. Gottesman, Quantum fault tolerance in small experiments, Tech. Rep. (arXiv, 2016).
[47] Y. Dong, L. Lin, and Y. Tong, Ground-State Preparation and Energy Estimation on Early Fault-Tolerant Quantum Computers via Quantum Eigenvalue Transformation of Unitary Matrices, PRX Quantum 3. 040305 (2022).
[48] A. Chowdhury, E. v. d. Berg, and P. Wocjan, Controlization Schemes Based on Orthogonal Arrays 10.48550/ARXIV.2407.09382 (2024).
[49] J. Günther, F. Witteveen, A. Schmidhuber, M. Miller, M. Christandl, and A. Harrow, Phase estimation with partially randomized time evolution (2025).
[50] M. Knap, A. Shashi, Y. Nishida, A. Imambekov, D. A. Abanin, and E. Demler, Time-Dependent Impurity in Ultracold Fermions: Orthogonality Catastrophe and Beyond, Physical Review X 2. 041020 (2012).
[51] A. Schuckert, A. Bohrdt, E. Crane, and M. Knap, Probing finite-temperature observables in quantum simulators of spin systems with short-time dynamics, Physical Review B 107. L140410 (2023).
[52] K. Hémery, K. Ghanem, E. Crane, S. L. Campbell, J. M. Dreiling, C. Figgatt, C. Foltz, J. P. Gaebler, J. Johansen, M. Mills, S. A. Moses, J. M. Pino, A. Ransford, M. Rowe, P. Siegfried, et al., Measuring the Loschmidt Amplitude for Finite-Energy Properties of the Fermi-Hubbard Model on an Ion-Trap Quantum Computer, PRX Quantum 5, 030323 (2024).
[53] O. Raz, N. Dudovich, and B. Nadler, Vectorial Phase Retrieval of 1-D Signals, IEEE Transactions on Signal Processing 61. 1632 (2013).
[54] J. M. Deutsch, Eigenstate thermalization hypothesis, Reports on Progress in Physics 81. 082001 (2018).
[55] E. Farhi, J. Goldstone, S. Gutmann, and M. Sipser, Quantum computation by adiabatic evolution, arXiv preprint quant-ph/00011006 (2000).
[56] M. Cerezo, A. Arrasmith, R. Babbush, S. C. Benjamin, S. Endo, K. Fujii, J. R. McClean, K. Mitarai, X. Yuan, L. Cincio, and P. J. Coles, Variational quantum algorithms, Nature Reviews Physics 3. 625 (2021).
[57] F. Arute, K. Arya, R. Babbush, D. Bacon, J. C. Bardin, R. Barends, S. Boixo, M. Broughton, B. B. Buckley, D. A. Buell, B. Burkett, N. Bushnell, Y. Chen, Z. Chen, B. Chiaro, et al., Hartree-Fock on a superconducting qubit quantum computer, Science 369. 1084 (2020).
[58] D. Poulin and P. Wocjan, Preparing Ground States of Quantum Many-Body Systems on a Quantum Computer, Physical Review Letters 102. 130503 (2009).
[59] G. Semeghini, H. Levine, A. Keesling, S. Ebadi, T. T. Wang, D. Bluvstein, R. Verresen, H. Pichler, M. Kalinowski, R. Samajdar, A. Omran, S. Sachdev, A. Vishwanath, M. Greiner, V. Vuletić, and M. D. Lukin, Probing topological spin liquids on a programmable quantum simulator, Science **374**, 1242 (2021).
[60] S. J. Evered, M. Kalinowski, A. A. Geim, T. Manovitz, D. Bluvstein, S. H. Li, N. Maskara, H. Zhou, S. Ebadi, M. Xu, J. Campo, M. Cain, S. Ostermann, S. F. Yelin, S. Sachdev, et al., Probing topological matter and fermion dynamics on a neutral-atom quantum computer (2025).
[61] D. A. Lidar, A. T. Rezakhani, and A. Hamma, Adiabatic approximation with exponential accuracy for many-body systems and quantum computation, Journal of Mathematical Physics 50. 102106 (2009).
[62] B. F. Schiffer, J. Tura, and J. I. Cirac, Adiabatic Spectroscopy and a Variational Quantum Adiabatic Algorithm, PRX Quantum 3. 020347 (2022).
[63] X. Mi, A. A. Michailidis, S. Shabani, K. C. Miao, P. V. Klimov, J. Lloyd, E. Rosenberg, R. Acharya, I. Aleiner, T. I. Andersen, M. Ansmann, F. Arute, K. Arya, A. Asfaw, et al., Stable Quantum-Correlated Many Body States through Engineered Dissipation, Science 383, 1332 (2024).
[64] W. J. Huggins, S. McArdle, T. E. O'Brien, J. Lee, N. C. Rubin, S. Boixo, K. B. Whaley, R. Babbush, and J. R. McClean, Virtual Distillation for Quantum Error Mitigation, Physical Review X 11. 041036 (2021).
[65] Cirq Developers, Cirq (2024).
[66] Quantum AI team and collaborators, qsim (2020).

## Claims

1. A method for estimating an overlap of a reference quantum state and an evolved quantum state of a quantum system, the evolved quantum state resulting from an evolution of an initial quantum state of the quantum system under a system unitary evolution having a description in terms of local operators that act on corresponding local subsystems of the quantum system, **characterized in that** the method comprises:
executing a plurality of quantum algorithms to thereby obtain a plurality of computational results indicative of a data series of phase information of the overlap, wherein each of the quantum algorithms requires at least one dedicated auxiliary quantum system associated with one of the local operators in a one-to-one correspondence and the execution of the quantum algorithm comprises:
providing a total quantum system including the quantum system prepared in the initial quantum state and the at least one auxiliary quantum system prepared in an initial auxiliary quantum state;
evolving the total quantum system under a total unitary evolution, wherein a joint action of the total unitary evolution on the quantum system and the at least one auxiliary quantum system is limited to each auxiliary quantum system and the corresponding subsystem of its associated local operator and is determined by the associated local operator;
applying a projective quantum measurement onto the reference quantum state to the quantum system and applying an auxiliary quantum measurement to the at least one auxiliary quantum system to thereby obtain the computational result.

2. The method according to claim 1, wherein the plurality of quantum algorithms comprises for at least one local operator of the description a quantum algorithm that requires a single auxiliary quantum system associated with the one local operator.

3. The method according to claim 1, wherein at least one quantum algorithm requires for each local operator of the description an associated auxiliary quantum system.

4. The method according to claim 1, wherein the total unitary evolution of at least one quantum algorithm further comprises an evolution of the quantum system under the system unitary evolution up to a specific point in time.

5. The method according to claim 1, wherein the description of the system unitary evolution comprises a sequence of local unitary operators or a set of local Hamiltonian operators.

6. The method according to claim 1, wherein for at least one quantum algorithm the joint action of the total unitary evolution on at least one of the auxiliary quantum systems and the corresponding subsystem of its associated local operator comprises a controlled application of the associated local operator to the subsystem controlled by a quantum state of the auxiliary quantum system.

7. The method according to claim 1, wherein the quantum system and/or the at least one auxiliary quantum systems are qudit systems, and in particular qubit systems.

8. The method according to claim 7, wherein each auxiliary quantum system is a qudit, and in particular a qubit.

9. The method according to claim 1, wherein the initial auxiliary quantum state is a separable quantum state.

10. The method according to claim 1, wherein the method further comprises estimating at least a phase of the overlap on the basis of the computational results.

11. The method according to claim 1, wherein the plurality of computational results is indicative of a data series of a time derivative of a phase of the overlap at different points in time.

12. The method according to claim 1, wherein the description of the system unitary evolution comprises a sequence of local unitary operators, and the plurality of quantum algorithms comprises for each local unitary operator of the description of the system unitary evolution in terms of local operators a quantum algorithm that requires a single auxiliary quantum system associated with the one local unitary operator so as to form a series of quantum algorithms from an initial quantum algorithm that is associated with an initial local unitary operator and includes an initial total unitary evolution that comprises the controlled application of the initial local unitary operator to its corresponding subsystem controlled by the quantum state of the auxiliary quantum system to a final quantum algorithm of the series of quantum algorithms, wherein a subsequent total unitary evolution of a subsequent quantum algorithm of the series of quantum algorithms differs from a preceding total unitary evolution of a preceding quantum algorithm of the series of quantum algorithms in that a control is removed from a previously controlled local unitary operator associated with the preceding quantum algorithm and a controlled application of a local unitary operator associated with the subsequent quantum algorithm to its corresponding subsystem is added at a position in accordance with the sequence of local unitary operators.

13. The method according to claim 1, wherein the description of the system unitary evolution comprises a set of local Hamiltonian operators, and wherein the plurality of quantum algorithms comprises for each of the local Hamiltonians and each of a plurality of points in time an associated quantum algorithm that requires a single auxiliary quantum system associated with the one local Hamiltonian, wherein the total unitary evolution comprises an evolution of the quantum system under the system unitary evolution up to the point in time, and the joint action of the total unitary evolution comprises the controlled application of an operator derived from the local Hamiltonian operator to its corresponding subsystem controlled by the quantum state of the auxiliary quantum system.

14. The method according to claim 1, wherein the auxiliary quantum measurement comprises for at least one auxiliary quantum system an independent measurement of the auxiliary quantum system resulting in a measurement outcome associated therewith, and wherein depending on an appropriate post-selection of the associated measurement outcome an action of the joint unitary evolution on the corresponding subsystem of its associated local operator comprises an imaginary time evolution determined by the local operator, and the method comprises the appropriate post-selection.

15. The method according to claim 14, wherein the plurality of quantum algorithms comprises for each of a plurality of points in time an associated quantum algorithm that requires for each local operator of the description of the system unitary evolution an associated auxiliary quantum system, the quantum measurement comprises for each auxiliary quantum system an independent quantum measurement, and wherein depending on an appropriate post-selection of the associated measurement outcome of each auxiliary quantum measurement the action of the total unitary evolution on each subsystem comprises the imaginary time evolution determined by its corresponding local operator, and wherein the joint unitary evolution further comprises an evolution of the quantum system under the system unitary evolution up to the point in time.

16. A hybrid quantum-classical computing system, the computing system comprising a classical processor and a quantum processor, wherein the system is configured to:
receive, by the quantum processor, a plurality of quantum algorithms for estimating an overlap of a reference quantum state and an evolved quantum state of a quantum system, the evolved quantum state resulting from an evolution of an initial quantum state of the quantum system under a system unitary evolution having a description in terms of local operators that act on corresponding local subsystems of the quantum system, wherein each of the quantum algorithms requires at least one dedicated auxiliary quantum system associated with one of the local operators in a one-to-one correspondence;
execute, by the quantum processor, each of the plurality of quantum algorithms to thereby obtain a plurality of computational results indicative of a data series of phase information of the overlap, wherein the execution of each quantum algorithm comprises: providing a total system including the quantum system prepared in the initial quantum state and the at least one auxiliary quantum system prepared in an initial auxiliary quantum state;
evolving the total quantum system under a total unitary evolution, wherein a joint action of the total unitary evolution on the quantum system and the at least one auxiliary quantum system is limited to each auxiliary quantum system and the corresponding subsystem of its associated local operator and determined by associated the local operator;
applying a projective quantum measurement onto the reference quantum state to the quantum system and applying an auxiliary quantum measurement to the at least one auxiliary quantum system to thereby obtain the computational result;
receive, by the classical processor, the plurality of computational results, and to estimate, by the classical processor, at least a phase of the overlap on the basis of the computational results.

17. A computer program product comprising instructions, which, when the computer program product is executed on a quantum processor, cause the quantum processor to carry out the method according to claim 1.

18. A computer-readable storage medium comprising instructions which, when executed by a quantum processor, cause the quantum processor to carry out the method of claim 1.
